(19) Europäisches Patentamt
European Patent Office
Office européen des brevets

(11) **EP 1 045 596 A2**

(12) **EUROPEAN PATENT APPLICATION**

(43) Date of publication:
**18.10.2000 Bulletin 2000/42**

(51) Int. Cl.$^7$: **H04N 13/04**

(21) Application number: **00104827.1**

(22) Date of filing: **07.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **12.04.1999 JP 10364799**
**31.08.1999 JP 24579399**

(71) Applicant:
**Mixed Reality Systems Laboratory Inc.**
**Yokohama-shi, Kanagawa-ken (JP)**

(72) Inventors:
• **Takikawa, Tomoshi,**
**c/o Mixed Reality Sys.Lab.Inc.**
**Yokohama-shi, Kanagawa-ken (JP)**

• **Sudo, Toshiyuki,**
**c/o Mixed Reality Sys.Lab.Inc.**
**Yokohama-shi, Kanagawa-ken (JP)**
• **Morishima, Hideki,**
**c/o Mixed Reality Sys.Lab.Inc.**
**Yokohama-shi, Kanagawa-ken (JP)**
• **Fujita, Takao,**
**c/o Mixed Reality Sys.Lab.Inc.**
**Yokohama-shi, Kanagawa-ken (JP)**

(74) Representative:
**Bühling, Gerhard, Dipl.-Chem. et al**
**Patentanwaltsbüro**
**Tiedtke-Bühling-Kinne & Partner**
**Bavariaring 4**
**80336 München (DE)**

(54) **Stereoscopic image display apparatus**

(57)    In a stereoscopic image display apparatus for guiding a parallax image displayed on a display to the left eye and to the right eye of an observer by use of an optical system, thereby permitting stereoscopic observation of information of the image displayed on the display, the parallax image is comprised of a plurality of original parallax images for the left and right eyes and each of the left and right eyes is allowed observe the plurality of original parallax images simultaneously. The optical system has a vertical cylindrical lens array consisting of vertical cylindrical lenses having a generating line along a vertical direction, a lateral cylindrical lens array consisting of lateral cylindrical lenses having a generating line along a horizontal direction, and a mask pattern in which a plurality of transmitting portions and shield portions are arrayed at a predetermined pitch in the horizontal direction and in the vertical direction.

FIG. 3

EP 1 045 596 A2

Printed by Xerox (UK) Business Services
2.16.7 (HRS)/3.6

**Description**

BACKGROUND OF THE INVENTION

Field of the Invention

The present invention relates to a stereoscopic image display apparatus having an image display portion for presenting independent images to the left and right eyes and constructed to be able to display stereoscopic images (parallax images) by the image display portion and, more particularly, to that suitable for stereoscopic observation of image information in good order in display devices of televisions, video cameras, computer monitors, game machines, and so on.

Related Background Art

It is mentioned as to the conventional stereoscopic image display apparatus of this type that, after continuously observing the images (parallax images) displayed on this display apparatus, some observers feel fatigued in the eyes.

One of the causes of this feeling of fatigue is said to be that on the occasion of the observation of the stereoscopic image the relation between binocular convergence and accommodation (focus adjustment) of eyes is different from that in everyday life.

There is a close relation between binocular convergence and accommodation action of eyes. Namely, the eyes have such a property that if there is a change in the binocular convergence the accommodation of eyes will automatically follow it.

On the other hand, in the case of the ordinary stereoscopic image display apparatus of the binocular parallax image method, the relation is preliminarily fixed between the optical system and the image display portion and one parallax image is presented per eye independently corresponding to each of the left and right eyes on the image display portion. Therefore, the binocular convergence can vary, but the variation over a certain range will cause a mismatch between the accommodation of eyes and the convergence.

If the eyes are kept continuously in a state of failure in the accommodation of eyes, which has to be automatically effected in conjunction with convergence as described above, the observer can feel unnatural and this will possibly result in the observer feeling fatigued.

In order to relieve the above feeling of fatigue, it is thus desirable to maintain the relation between the binocular convergence and the accommodation of eyes in the same state as that in everyday life.

As a solution to the above problem, Japanese Patent Application Laid-Open No. 3-292093 discloses the suggestion that lenses of the optical system are arranged to be driven in accordance with the convergence, thereby permitting the accommodation of eyes.

Further, Japanese Patent Application Laid-Open No. 7-167633 discloses the suggestion that the left and right images are presented in the image display portion so that the binocular convergence can be equal to an angle according to the diopter of the optical system in the image display apparatus.

The method suggested in the Japanese Patent Application Laid-Open No. 3-292093 necessitates a mechanical driving system and the apparatus tends to become larger. The method suggested in Japanese Patent Application Laid-Open No. 7-167633 has drawbacks that processing is first allowed after all data of one screen for each of the left and right eyes is once read in and that operation loads are large. It is thus difficult to continuously process all image frames.

SUMMARY OF THE INVENTION

An object of the present invention is to provide a stereoscopic image display apparatus that can present image information in a state close to the normal observation state to the observer and that thus poses no physiological contradiction between the convergence and the accommodation of the observer, whereby the observer rarely feels fatigued during observation of stereoscopic image.

A stereoscopic image forming apparatus according to one aspect of the present invention is a stereoscopic image display apparatus comprising an observation position detecting mechanism for detecting an observation position of an observer and a display for displaying parallax images corresponding to the left and right eyes of the observer while controlling the parallax images so as to track information of the observation position, said stereoscopic image display apparatus permitting stereoscopic observation of the parallax images by use of the observation position detecting mechanism and the display,

wherein the observation position detecting mechanism comprises pupil detecting means for detecting positions of the pupils of the eyes of the observer, and

wherein each of the parallax images is comprised of a plurality of original parallax images for the left or right eye and each of the left and right eyes is allowed to observe the plurality of original parallax images simultaneously.

A stereoscopic image display apparatus according to one aspect of the present invention is a stereoscopic image display apparatus for permitting stereoscopic observation of parallax images, using displays each of which displays a parallax image corresponding to the left or right eye of an observer,

wherein at least one of the parallax images for the left and right eyes is comprised of a plurality of original parallax images.

In one aspect of the present invention, in each of the above stereoscopic image forming apparatus, the plurality of original parallax images observed simultaneously by said left and right eyes are parallax images taken by a plurality of photographing devices under such setting that a separation between the plurality of photographing devices is equal to e, where e is a value close to or not more than half of a pupil diameter p.

In one aspect of the present invention, in each of the above stereoscopic image forming apparatus, said display forms a mask pattern in which a plurality of transmitting portions and shield portions are arrayed at a predetermined pitch in a horizontal direction and in a vertical direction, on a display surface of an optical modulator having a discrete pixel structure, light from light source means is guided to the optical modulator to form patterned beams, an image display device having a discrete pixel structure and displaying a composite parallax image prepared by making use of scan lines is illuminated through optical means with the patterned beams, and beams based on the composite parallax image displayed on the image display device are guided to the left and right eyes of the observer, thereby permitting the stereoscopic observation of image information.

In one aspect of the present invention, in the above stereoscopic image forming apparatus, a pattern shape of the mask pattern in said optical modulator is varied based on information from said pupil detecting means.

In one aspect of the present invention, in each of the above stereoscopic image forming apparatus, a horizontal element of each of the transmitting portions in the mask pattern of said optical modulator is comprised of a plurality of pixels.

A stereoscopic vision information photographing method according to one aspect of the present invention is a stereoscopic vision information photographing method comprising:

a first step of photographing a first left parallax image and a first right parallax image while keeping a distance between photographing optical axes equal to k times a standard eye-to-eye distance E; and
a second step of photographing a second left parallax image and a second right parallax image in such a photographing state that the distance between photographing optical axes is kept at k times the standard eye-to-eye distance E and that photographing positions are displaced by k times a distance e smaller than a standard pupil diameter.

In one aspect of the present invention, the above parallax image forming method comprises a step of forming at least one of parallax images for left and right eyes by alternately arranging first parallax partial images of the one parallax image and second parallax partial images of the one parallax image.

A stereoscopic image display apparatus according to one aspect of the present invention is a stereoscopic image display apparatus for guiding a parallax image displayed on a display to the left eye and to the right eye of an observer by use of an optical system, thereby permitting stereoscopic observation of information of the image displayed on the display, wherein said parallax image comprises a plurality of original parallax images for the left and right eyes and each of the left and right eyes is allowed to observe the plurality of original parallax images simultaneously.

In one aspect of the present invention, in the above stereoscopic image display apparatus, said optical system comprises a vertical cylindrical lens array consisting of vertical cylindrical lenses having a generating line along a vertical direction, a lateral cylindrical lens array consisting of lateral cylindrical lenses having a generating line along a horizontal direction, and a mask pattern in which a plurality of transmitting portions and shield portions are arrayed at a predetermined pitch in the horizontal direction and in the vertical direction.

In one aspect of the present invention, in the above stereoscopic image display apparatus, said optical system guides the parallax image displayed on said display to the left eye and to the right eye of said observer in the form of beams of a vertical stripe shape, and a horizontal width of parallax image areas formed at an observation position of the observer by the beams of the vertical stripe shape is set to a value not more than half of a pupil diameter of the observer.

In one aspect of the present invention, in the above stereoscopic image display apparatus, n original parallax images (n is an integer not less than 2) forming said parallax image are images taken from view point positions spaced at intervals of a distance equal to a value not more than half of a pupil diameter of the observer.

A stereoscopic image display apparatus according to one aspect of the present invention is a stereoscopic image display apparatus comprising a pupil position detecting mechanism for detecting positions of pupils of an observer, and an optical system for guiding beams based on a parallax image displayed on a display, to the left eye and to the right eye of the observer, thereby permitting stereoscopic observation of information of the image displayed on the display, wherein said parallax image is comprised of a plurality of original parallax images for the left and right eyes and projected positions of the beams based on the parallax image are controlled according to information about the positions of the pupils of the eyes of the observer, outputted from the pupil position detecting mechanism, whereby the plurality of original parallax images are observed through each of the pupils of the left and right eyes of the observer.

In one aspect of the present invention, in the above stereoscopic image display apparatus, said optical system comprises a vertical cylindrical lens array consisting of vertical cylindrical lenses having a generating line along a vertical direction, a lateral cylindrical lens array consisting of lateral cylindrical lenses having a generating line along a horizontal direction, and a mask pattern in which a plurality of transmitting portions and shield portions are arrayed at a predetermined pitch in the horizontal direction and in the vertical direction.

In one aspect of the present invention, in the above stereoscopic image display apparatus, a pattern shape of said mask pattern is varied according to an eye-to-eye distance of the observer, based on the information from said pupil position detecting means, and the parallax images corresponding to the left and right eyes of the observer are controlled so as to be projected to the left and right eyes of the observer.

In one aspect of the present invention, in the above stereoscopic image display apparatus, when said n original parallax images (n is an integer not less than 2) are projected into n areas of a vertical stripe shape at an observation position, a pattern shape of said mask pattern is switched to another periodically and a display of the parallax image displayed on said display is also switched to another in synchronism therewith, whereby the same parallax images are always projected into the associated areas of the parallax images of the vertical stripe shape projected to the observation position.

A stereoscopic image display apparatus according to one aspect of the present invention is a stereoscopic image display apparatus for guiding a parallax image displayed on a display to the left eye and to the right eye of an observer by use of an optical system, thereby permitting stereoscopic observation of information of the image displayed on the display, wherein the parallax image is made by combination of six or more original parallax images and three or more original parallax images are observed through each of the pupils of the left and right eyes of the observer.

In one aspect of the present invention, in the above stereoscopic image display apparatus, said optical system comprises a vertical cylindrical lens array consisting of vertical cylindrical lenses having a generating line along a vertical direction, a lateral cylindrical lens array consisting of lateral cylindrical lenses having a generating line along a horizontal direction, and a mask pattern in which a plurality of transmitting portions and shield portions are arrayed at a predetermined pitch in the horizontal direction and in the vertical direction.

In one aspect of the present invention, in the above stereoscopic image display apparatus, said optical system guides the parallax image displayed on said display to the left eye and to the right eye of said observer in the form of beams of a vertical stripe shape, and a horizontal width of parallax image areas formed at an observation position of the observer by the beams of the vertical stripe shape is set to a value not more than half of a pupil diameter of the observer.

In one aspect of the present invention, in the above stereoscopic image display apparatus, said parallax image is made by combination of n original parallax images where n is an integer satisfying $6 \leq n$ and the n original parallax images are images taken from view point positions spaced at intervals of a distance equal to a value not more than half of a pupil diameter of the observer.

A stereoscopic image display apparatus according to one aspect of the present invention is a stereoscopic image display apparatus comprising a pupil position detecting mechanism for detecting positions of pupils of an observer, and an optical system for guiding beams based on a parallax image displayed on a display, to the left eye and to the right eye of the observer, thereby permitting stereoscopic observation of information of the image displayed on the display, wherein said parallax image is made by combination of six or more original parallax images, and projected positions of the beams based on the parallax image are controlled according to information about the positions of the pupils of the eyes of the observer, outputted from the pupil position detecting mechanism, whereby three or more original parallax images are observed through each of the pupils of the left and right eyes of the observer.

In one aspect of the present invention, in the above stereoscopic image display apparatus, said optical system comprises a vertical cylindrical lens array consisting of vertical cylindrical lenses having a generating line along a vertical direction, a lateral cylindrical lens array consisting of lateral cylindrical lenses having a generating line along a horizontal direction, and a mask pattern in which a plurality of transmitting portions and shield portions are arrayed at a predetermined pitch in the horizontal direction and in the vertical direction.

In one aspect of the present invention, in the above stereoscopic image display apparatus, a pattern shape of said mask pattern is varied according to an eye-to-eye distance of the observer, based on the information from said pupil position detecting means, and the parallax images corresponding to the left and right eyes of the observer are controlled so as to be projected to the left and right eyes of the observer.

In one aspect of the present invention, in the above stereoscopic image display apparatus, said parallax image is made by combination of n original parallax images where n is an integer satisfying $6 \leq n$, and when said n original parallax images are projected into n areas of a vertical stripe shape at an observation position, a pattern shape of said mask pattern is switched to another periodically and a display of the parallax image displayed on said display is also switched to another in synchronism therewith, whereby the same parallax images are always projected into the associated areas of the parallax images of the vertical stripe shape projected to the observation position.

BRIEF DESCRIPTION OF THE DRAWINGS

Fig. 1 is a diagram to show the overall mechanism in Embodiment 1 of the present invention;
Fig. 2 is a system block diagram of Embodiment 1;
Fig. 3 is a schematic diagram to show the major part of the display portion in Embodiment 1;
Fig. 4 is an explanatory diagram to explain a mask pattern in Embodiment 1 of the present invention;
Fig. 5 is an explanatory diagram to explain how to produce the composite parallax image in Embodiment 1 of the present invention;
Fig. 6 is an explanatory diagram to explain how to produce the composite parallax image in Embodiment 1 of the present invention;
Fig. 7 is an explanatory diagram to explain the optical action in Embodiment 1 of the present invention;
Fig. 8 is an explanatory diagram to explain the optical action in Embodiment 1 of the present invention;
Fig. 9 is an explanatory diagram to explain the optical action in Embodiment 1 of the present invention;
Fig. 10 is an explanatory diagram to explain the optical action in Embodiment 1 of the present invention;
Fig. 11 is an explanatory diagram to explain the composite parallax image and the display method of the mask pattern in Embodiment 1 of the present invention;
Fig. 12 is an explanatory diagram to explain the composite parallax image and the display method of the mask pattern in Embodiment 1 of the present invention;
Fig. 13 is an explanatory diagram to explain the composite parallax image and the display method of the mask pattern in Embodiment 1 of the present invention;
Fig. 14 is an explanatory diagram to explain the composite parallax image and the display method of the mask pattern in Embodiment 1 of the present invention;
Fig. 15 is an explanatory diagram to explain the composite parallax image and the display method of the mask pattern in Embodiment 1 of the present invention;
Fig. 16 is an explanatory diagram to explain the composite parallax image and the display method of the mask pattern in Embodiment 1 of the present invention;
Fig. 17 is an explanatory diagram to explain the composite parallax image and the display method of the mask pattern in Embodiment 1 of the present invention;
Fig. 18A and Fig. 18B are explanatory diagrams to explain a method for producing original parallax images in Embodiment 1 of the present invention;
Fig. 19 is a schematic diagram to show the major part of the display portion in Embodiment 2 of the present invention;
Fig. 20 is an explanatory diagram to explain the mask pattern in Embodiment 2 of the present invention;
Fig. 21 is an explanatory diagram to explain how to produce the composite parallax image in Embodiment 2 of the present invention;
Fig. 22 is an explanatory diagram to explain how to produce the composite parallax image in Embodiment 2 of the present invention;
Fig. 23A, Fig. 23B, and Fig. 23C are explanatory diagrams to explain the optical action in Embodiment 2 of the present invention;
Fig. 24A, Fig. 24B, and Fig. 24C are explanatory diagrams to explain the optical action in Embodiment 2 of the present invention;
Fig. 25 is an explanatory diagram to explain the composite parallax image and the display method of the mask pattern in Embodiment 2 of the present invention;
Fig. 26 is an explanatory diagram to explain the composite parallax image and the display method of the mask pattern in Embodiment 2 of the present invention;
Fig. 27 is an explanatory diagram to explain the composite parallax image and the display method of the mask pattern in Embodiment 2 of the present invention;
Fig. 28 is an explanatory diagram to explain the composite parallax image and the display method of the mask pattern in Embodiment 2 of the present invention;
Fig. 29 is an explanatory diagram to explain the composite parallax image and the display method of the mask pattern in Embodiment 2 of the present invention;
Fig. 30 is an explanatory diagram to explain the composite parallax image and the display method of the mask pattern in Embodiment 2 of the present invention;
Fig. 31 is an explanatory diagram to explain the composite parallax image and the display method of the mask pattern in Embodiment 2 of the present invention;
Fig. 32A and Fig. 32B are explanatory diagrams to explain a method for producing the original parallax images in Embodiment 2 of the present invention;
Fig. 33 is a diagram to show the overall mechanism in Embodiment 3 of the present invention;
Fig. 34 is a system block diagram of Embodiment 3 of the present invention;
Fig. 35 is a schematic diagram to show the major part of the stereoscopic image display portion in Embodiment 3 of the present invention;
Fig. 36 is an explanatory diagram to explain the mask pattern in Embodiment 3 of the present invention;

Fig. 37A and Fig. 37B are explanatory diagrams to explain a method for producing the original parallax images in Embodiment 3 of the present invention;

Fig. 38 is an explanatory diagram to explain how to produce the composite parallax image in Embodiment 3 of the present invention;

Fig. 39 is an explanatory diagram to explain the optical action in Embodiment 3 of the present invention;

Fig. 40 is an explanatory diagram to explain the optical action in Embodiment 3 of the present invention;

Fig. 41 is an explanatory diagram to explain the optical action in Embodiment 3 of the present invention;

Fig. 42 is an explanatory diagram to explain the optical action in Embodiment 3 of the present invention;

Fig. 43 is an explanatory diagram to explain the optical action in Embodiment 3 of the present invention;

Fig. 44 is an explanatory diagram to explain the optical action in Embodiment 3 of the present invention;

Fig. 45A and Fig. 45B are explanatory diagrams to explain the composite parallax image and the display method of the mask pattern in Embodiment 3 of the present invention;

Fig. 46 is an explanatory diagram to explain the composite parallax image and the display method of the mask pattern in Embodiment 3 of the present invention;

Fig. 47 is an explanatory diagram to explain the composite parallax image and the display method of the mask pattern in Embodiment 3 of the present invention;

Fig. 48 is a diagram to show the overall mechanism in Embodiment 4 of the present invention;

Fig. 49 is a system block diagram of Embodiment 4 of the present invention;

Fig. 50 is an explanatory diagram to explain the mask pattern in Embodiment 4 of the present invention;

Fig. 51 is an explanatory diagram to explain a method for producing the original parallax images in Embodiment 4 of the present invention;

Fig. 52 is an explanatory diagram to explain how to produce the composite parallax image in Embodiment 4 of the present invention;

Fig. 53 is an explanatory diagram to explain the optical action in Embodiment 4 of the present invention;

Fig. 54 is an explanatory diagram to explain the optical action in Embodiment 4 of the present invention;

Fig. 55 is an explanatory diagram to explain the optical action in Embodiment 4 of the present invention;

Fig. 56 is an explanatory diagram to explain the optical action in Embodiment 4 of the present invention;

Fig. 57 is an explanatory diagram to explain the optical action in Embodiment 4 of the present invention;

Fig. 58 is an explanatory diagram to explain the optical action in Embodiment 4 of the present invention;

Fig. 59A and Fig. 59B are explanatory diagrams to explain the composite parallax image and the display method of the mask pattern in Embodiment 4 of the present invention;

Fig. 60 is an explanatory diagram to explain the composite parallax image and the display method of the mask pattern in Embodiment 4 of the present invention;

Fig. 61 is an explanatory diagram to explain the composite parallax image and the display method of the mask pattern in Embodiment 4 of the present invention;

Fig. 62 is an explanatory diagram to explain the composite parallax image and the display method of the mask pattern in Embodiment 4 of the present invention;

Fig. 63 is an explanatory diagram to explain the composite parallax image and the display method of the mask pattern in Embodiment 4 of the present invention;

Fig. 64 is an explanatory diagram to explain the composite parallax image and the display method of the mask pattern in Embodiment 4 of the present invention;

Fig. 65 is an explanatory diagram to explain the composite parallax image and the display method of the mask pattern in Embodiment 4 of the present invention; and

Fig. 66 is an explanatory diagram to explain the composite parallax image and the display method of the mask pattern in Embodiment 4 of the present invention.

DETAILED DESCRIPTION OF THE PREFERRED EMBODIMENTS

(Embodiment 1)

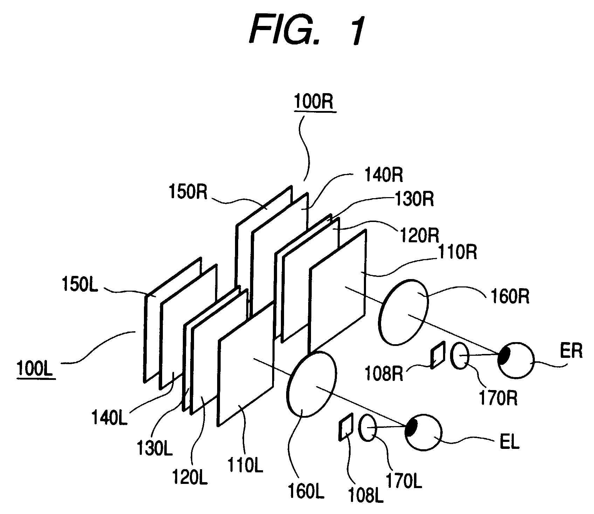

Embodiment 1 of the stereoscopic image display apparatus according to the present invention will be described referring to Fig. 1 to Fig. 17. Fig. 1 is a diagram to show the overall mechanism of this Embodiment 1.

In the same figure, EL and ER represent the left eye and the right eye of the observer, respectively, and 100L and 100R display portions corresponding to the left eye and to the right eye.

In the present specification the following description will be simplified by attaching L or R to the end of each number representing members with identical action for the left and right eyes, while omitting the description of "for the left eye" or "for the right eye" at each occasion.

Reference symbols 110L and 110R indicate transmission type image display devices of the liquid crystal or the like, which display images for the respective eyes EL, ER.

Symbols 140L, 140R represent optical modulators of the liquid crystal or the like having the discrete pixel structure and symbols 150L and 150R backlight light sources (light source means). Two lenticular lenses 120L or 120R, 130L or 130R (optical means) having their respective generating-line directions perpendicular to each other are placed between the image display device 110L, 110R and the optical modulator 140L, 140R.

Symbols 160L and 160R denote magnifying lenses, through which the images displayed on the image display devices 110L, 110R are observed at a predetermined magnification.

Symbols 170L and 170R designate imaging lenses, each of which forms an image of the eye EL or ER of the observer on an image sensor 108L or 108R. Each of the image sensors 108L, 108R is comprised, for example, of a two-dimensional CCD sensor.

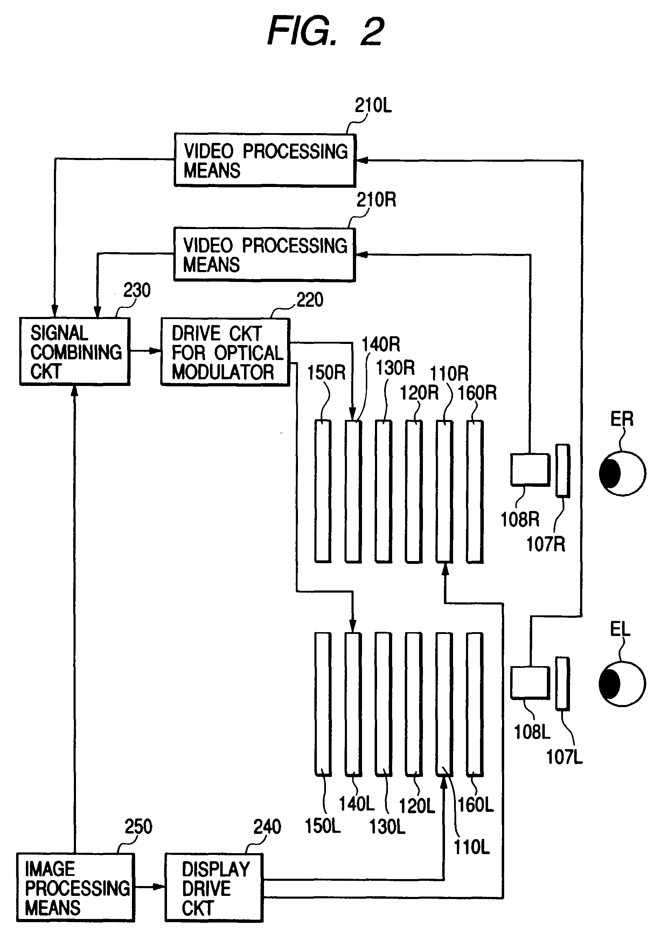

Fig. 2 is a system block diagram for explaining the system of Embodiment 1.

In the same figure, the image display devices 110L, 110R display composite parallax images (for observation of stereoscopic image (3D)), which will be detailed hereinafter, or ordinary two-dimensional images.

Numeral 240 designates a display drive circuit, which drives the image display devices 110L, 110R so as to display the composite parallax images, which will be detailed hereinafter, based on a signal from an image processing means 250. The image processing means 250 outputs information about display areas of the composite parallax images to a signal combining circuit 230.

Symbols 210L and 210R denote video processing means for processing video signals from the image sensors 108L, 108R to calculate the positions of the pupils of the observer's eyes.

The information about the positions of the pupils of the observer's eyes, which is acquired by the video processing means 210L, 210R, is also outputted to the signal combining circuit 230.

The signal combining circuit 230 generates information for driving the optical modulators 140L, 140R, based on the information from the image processing means 250 and from the video processing means 210L, 210R, and outputs the information to a modulator drive circuit 220.

The optical modulators 140L, 140R are driven by the modulator drive circuit 220 and each optical modulator displays a checkered mask pattern in an area corresponding to the area of the composite parallax image displayed on the image display device 110L or 110R and a uniform density in an area corresponding to the two-dimensional image display portion in the display surface thereof.

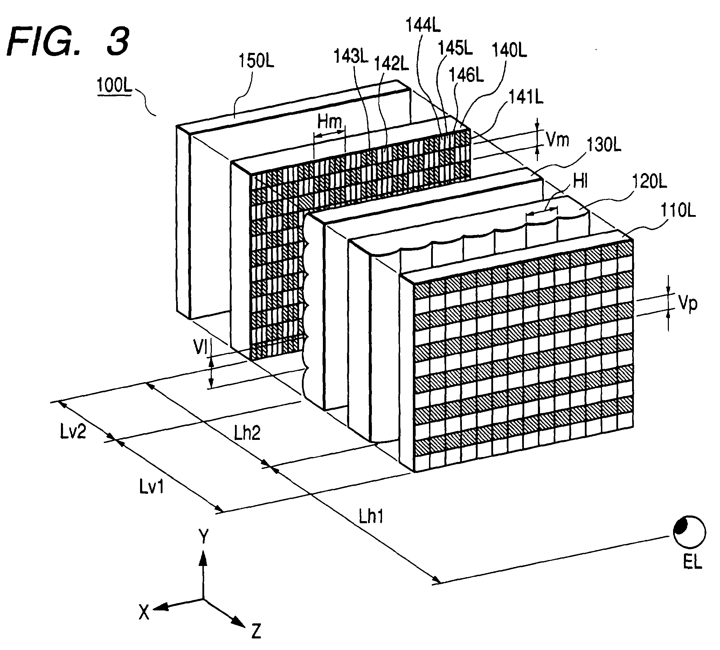

Fig. 3 is a schematic diagram to show the major part of the display portion 100L corresponding to the left eye EL. The display portion 100R corresponding to the right eye also has the like structure.

In Fig. 3, the optical modulator 140L having the discrete pixel structure forms the mask pattern 141L consisting of light-transmitting portions (transmitting portions) 142L and light-intercepting portions (shield portions) 143L.

Symbol 130L designates a lateral lenticular lens (lateral cylindrical lens array) having the generating line along the horizontal direction X, in which a lot of plano-convex, lateral cylindrical lenses are arranged in the vertical direction Y.

The lateral lenticular lens 130L is designed to have such a lens curvature as to image the transmitting portions 142L and shield portions 143L of the mask pattern 141L on the image display surface of the image display device 110L. The lens pitch (width) V1 of the lateral lenticular lens 130L is so set as to correspond to the vertical width Vm of the transmitting portions 142L and shield portions 143L of the mask pattern 141L. The present embodiment shows an example of the pitch V1 equal to two times the width Vm.

Symbol 120L denotes a vertical lenticular lens (vertical cylindrical lens array) having the generating line along the vertical direction Y, in which a lot of plano-convex, vertical cylindrical lenses are arranged in the horizontal direction X. Each cylindrical lens forming the vertical lenticular lens 120L is designed to have such a lens curvature as to image the mask pattern 141L at the observation position.

The horizontal pitch Hm of the transmitting portions 142L and the shield portions 143L of the mask pattern 141L is so set as to correspond to one pitch (width) H1 of the vertical cylindrical lenses of the vertical lenticular lens 120L.

Fig. 3 is illustrated with excluding glass covers, sheet polarizers, electrodes, etc. of the image display device 110L and the optical modulator 140L and with schematically illustrating the display image and the mask pattern on the display surfaces.

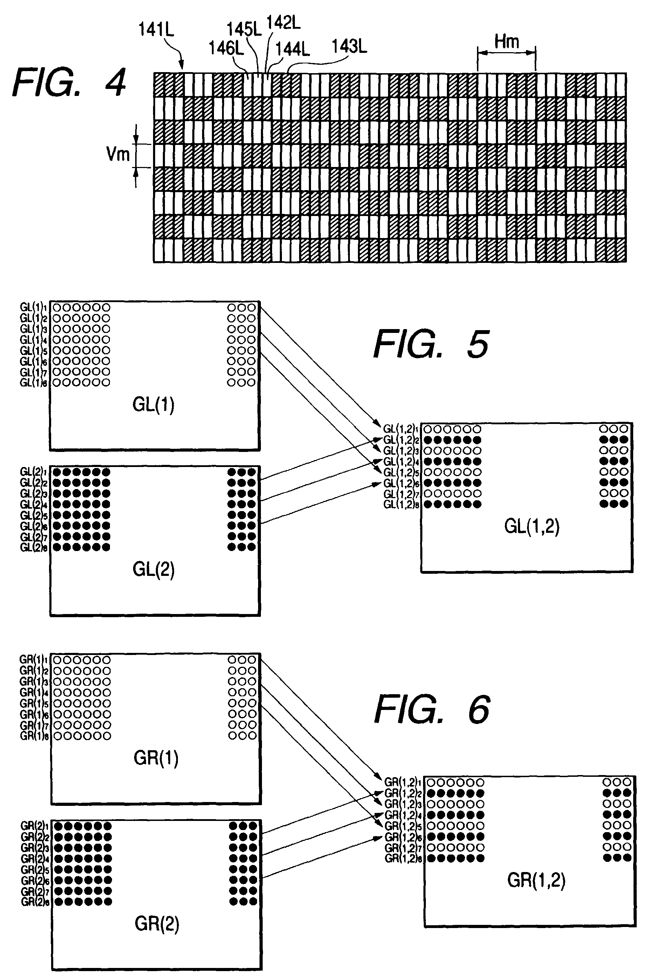

Now, the mask pattern 141L consisting of the transmitting portions 142L and the shield portions 143L displayed on the optical modulator 140L will be described referring to Fig. 4.

Fig. 4 is a front elevation of the mask pattern 141L illustrated in Fig. 3.

As illustrated in the same figure, the mask pattern 141L is comprised of the transmitting portions 142L and the shield portions 143L having the horizontal pitch Hm and the vertical width Vm. A transmitting portion 142L is composed of three pixels 144L, 145L, and 146L, while a shield portion 143L is composed similarly of three pixels. Each portion can be controlled independently.

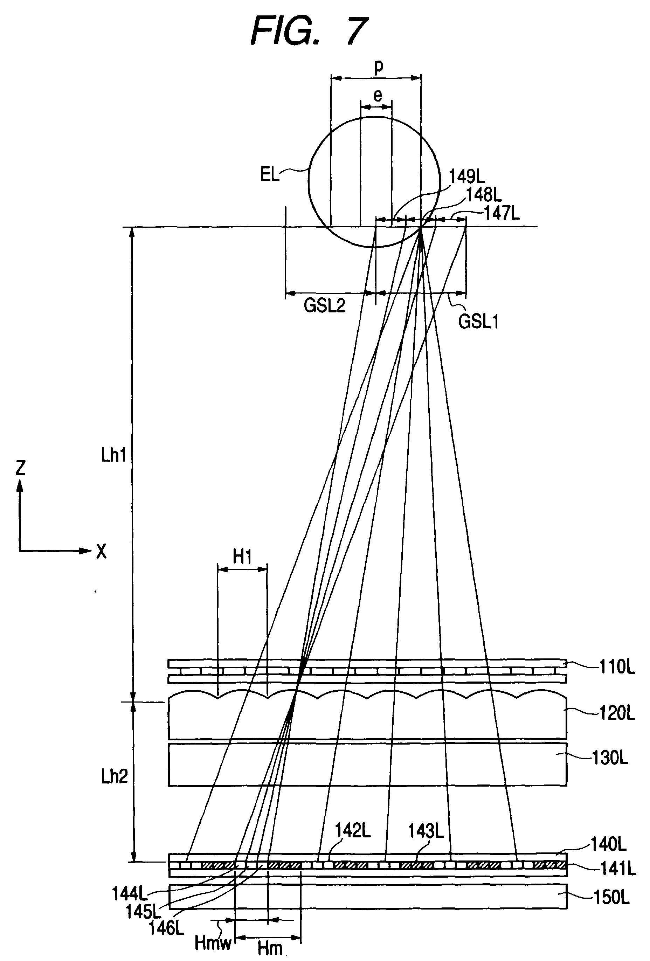

Next, the composite parallax images displayed on the image display devices 110L, 110R will be described referring to Fig. 5 and Fig. 6.

For the left eye EL, as illustrated in Fig. 5, two original parallax images GL(1), GL(2) corresponding to the left eye EL are divided each into a lot of stripe images of the horizontal stripe shape as illustrated and the element stripe images GL(1)i, GL(2)i thus obtained are alternately rearranged line by line on respective scan lines, thereby forming a composite parallax image GL(1, 2).

Likewise, for the right eye ER, as illustrated in Fig. 6, two original parallax images GR(1), GR(2) corresponding to the right eye ER are divided each into a lot of stripe images of the horizontal stripe shape as illustrated and the stripe images GR(1)i, GR(2)i thus obtained are alternately rearranged line by line on respective scan lines, thereby forming a composite parallax image GR(1, 2). In the present invention the composite parallax image may also be formed for at least one of the left and right eyes.

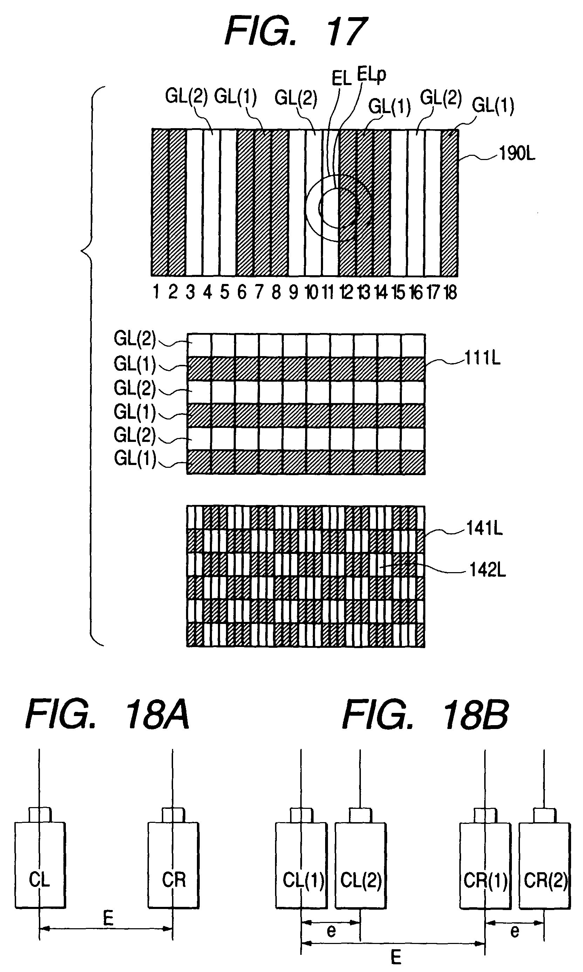

A method for producing the original parallax images GL(1), GL(2), GR(1), GR(2) will be described below referring to Figs. 18A and 18B.

Fig. 18B is an explanatory diagram to explain a method for producing the original parallax images, for example, using four video cameras CL(1), CL(2), CR(1), CR(2). Production of original parallax images by CG is also based on this method.

The parallax images used in the ordinary stereoscopic display apparatus of the binocular parallax image method are normally parallax images of images GL, GR taken by two cameras CL, CR set with their optical axes parallel to each other and spaced at the difference equal to the separation E between the two eyes of a man (standard eye-to-eye distance) as illustrated in Fig. 18A. In the case of still images the images can also be taken by a single camera while moving it in parallel.

It is, however, noted that the parallax images are produced by properly setting the distance between the optical axes of the cameras or the distance in the parallel movement according to such conditions as the size of the display screen, the distance from the observer to the screen, the magnification of the display image to an actual object, and so on.

In contrast with it, the original parallax images used in the present Embodiment 1 are obtained as follows; under such conditions that E is the standard eye-to-eye distance and e is a value close to half of the standard pupil diameter p of eyes (for example, $e = (P/2) \pm (P/10)$), images are taken by the cameras CL(1), CL(2), CR(1), CR(2) located as illustrated in Fig. 18B and the images taken by the cameras GL(1), GL(2) are used as the original parallax images corresponding to the left eye, while the images taken by the cameras GR(1), GR(2) as the original parallax images corresponding to the right eye.

Just as the distance E between the optical axes of the cameras is set optionally in the case of the ordinary binocular parallax image method, the distance E between the optical axes of the cameras and the value of e may also be set optionally while keeping the ratio of e/E constant in the case of the present embodiment, however.

Next, the details of the display of parallax image for the left eye will be described referring to Fig. 7 to Fig. 10. The same can also apply to the right eye, though the description thereof will be omitted.

Fig. 7 is a horizontal cross-sectional view (X-Z cross section) of the display portion illustrated in Fig. 3.

In the same figure, light from the backlight light source 150L emerges from the transmitting portions 142L of the mask pattern 141L of the optical modulator 140L and travels through the horizontal cylindrical lens 130L. (The horizontal lenticular lens has no specific action in this cross-sectional direction.)

Then the cylindrical lenses forming the vertical lenticular lens 120L project beams of transmitted light from the transmitting portions 142L into an illuminated parallax image area GSL1 at the position of the left eye EL of the observer.

The beams projected into the illuminated parallax image area GSL1 are modulated by the composite parallax image displayed on the image display device 110L provided between the vertical lenticular lens 120L and the observer's left eye EL. In this cross section the beams travel, for example, through the element stripe images GL(1)1, GL(1)3, GR(1)5,... of the original parallax image GL(1) forming the composite parallax image GL(1, 2) illustrated in Fig. 5, and thus the original parallax image GL(1) is observed in the illuminated parallax image area GSL1.

Since each of the transmitting portions 142L of the mask pattern 141L is composed of three pixels 144L, 145L, 146L, beams passing through the respective pixels are projected into corresponding areas 147L, 148L, 149L.

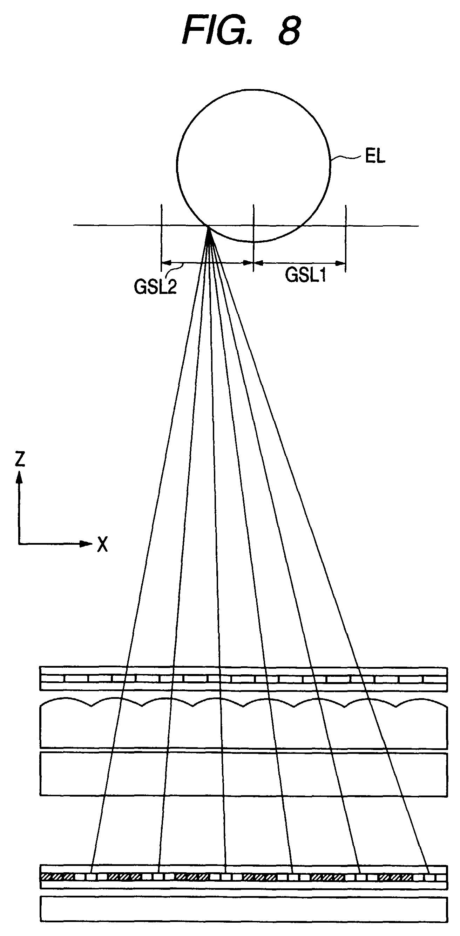

Similarly, as illustrated in Fig. 8, beams in a cross section corresponding to one scan line below or above the above-stated line of Fig. 7 in the image display device 110L are radiated into an illuminated parallax image area GSL2. The beams radiated into this illuminated parallax image area GSL2 are modulated by the composite parallax image displayed on the image display device 110L provided between the vertical lenticular lens 120L and the observer's left eye. In this cross section the beams travel through the element stripe images GL(2)2, GL(2)4, GL(2)6,... of the original parallax image GL(2) forming the composite parallax image GL(1, 2) illustrated in Fig. 5, and thus the original parallax image GL(2) is observed in the illuminated parallax image area GSL2. This area is also composed of three partial areas.

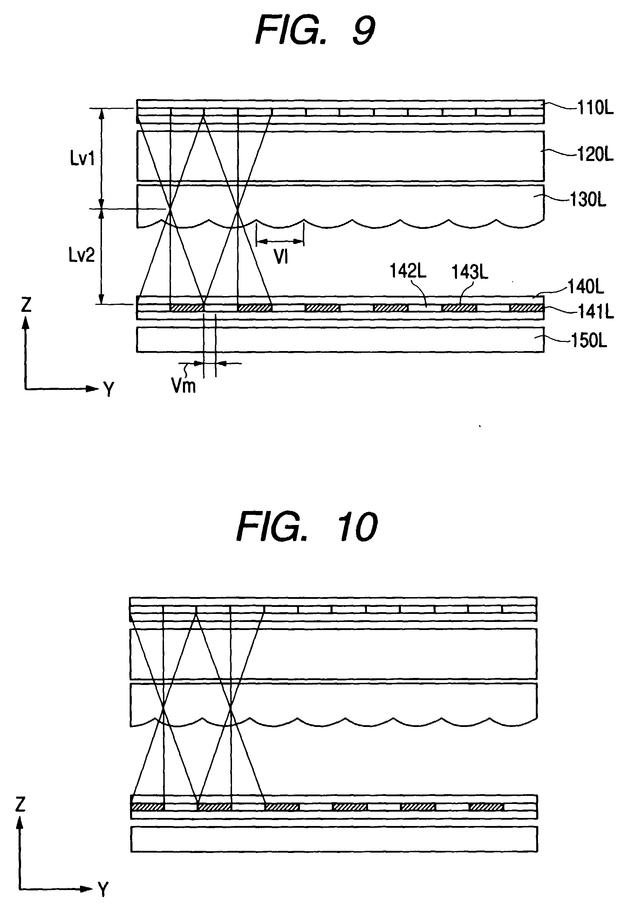

Fig. 9 is a vertical cross-sectional view (Y-Z cross section) of the display portion of Fig. 3. In this cross section images of the transmitting portions 142L of the mask pattern 141L illuminated by the backlight light source 150L are formed on the image display surface of the image display device 110L by the action of the horizontal lenticular lens 130L, and on that occasion the images are formed at such a magnification that the width of the transmitting portions 142L of the optical modulator 140L becomes equal to the pixel width of the image display device 110L. For that reason, for example, only the element stripe images of the original parallax image of GL(1) become irradiated by properly setting the positions of the optical modulator 140L, the image display device 110L, and the horizontal lenticular lens 130L.

Similarly, as illustrated in Fig. 10, only the element stripe images of the original parallax image GL(2) are irradiated in a pixel column one pixel next to that in Fig. 9.

When the pupil (pupil diameter p) of the left eye EL is located at the border between the illuminated parallax image areas GSL1, GSL2, the observer's left eye can observe the original parallax images GL(1), GL(2) passing separately and independently, at the pupil portion accordingly.

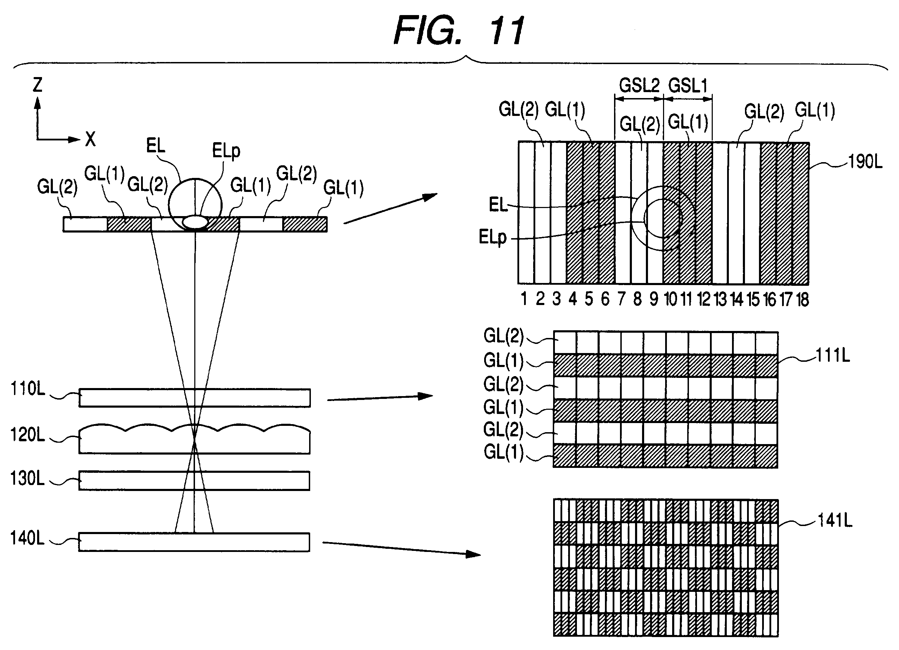

Fig. 11 to Fig. 13 are explanatory diagrams to schematically show this action in an easy-to-understand way. In Fig. 11, a diagram on the left side shows the principal part of the horizontal cross-sectional view (X-Z cross section) and on the right side there are the mask pattern 141L displayed on the optical modulator 140L, the composite parallax image 111L displayed on the image display device 110L, and a projected parallax image 190L projected to the observer's position.

The projected parallax image 190L is composed of the original parallax images GL(1), GL(2). Fig. 11 shows a situation in which the pupil ELp of the observer's left eye EL is located at the position of the border between the original parallax images GL(1), GL(2) and the beams of the parallax images are projected to the pupil in such an order that the parallax images can be observed in a normal state, i.e., in the order of GL(1) and GL(2) from the right, for example.

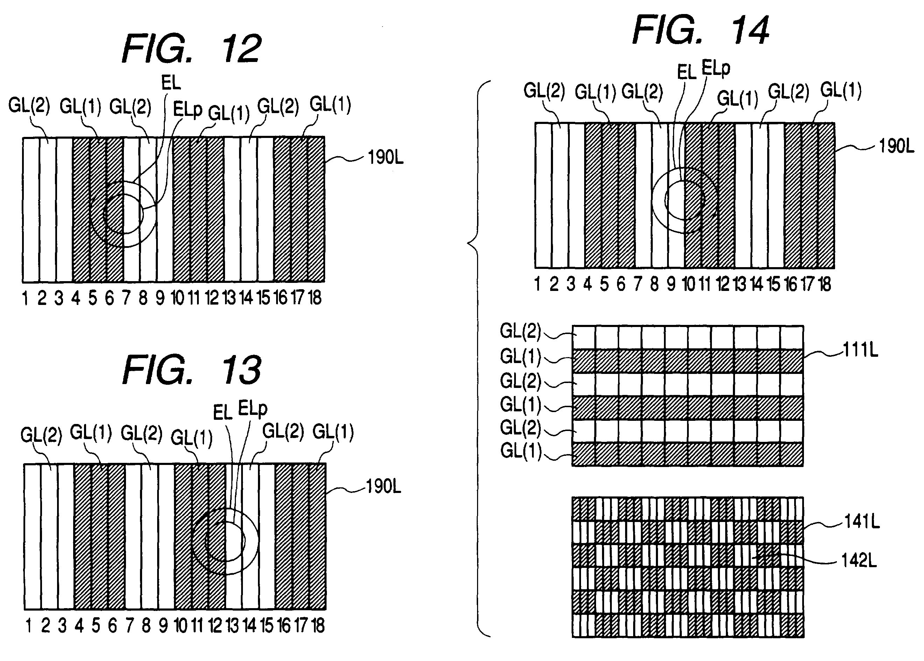

When the observer moves from this state to the left up to the state of Fig. 12 or to the right up to the state of Fig. 13, i.e., when the original parallax images are observed in the order of GL(2) and GL(1) opposite to that in Fig. 11 by the pupil ELp of the left eye EL, the direction of parallax is reverse and it is thus an abnormal state different from that where the observer observes normal real scenes.

Next described with Fig. 2 and Fig. 14 to Fig. 17 is the function for permitting the observer to always observe the parallax images in the normal order even with change in the pupil position of the observer's eye.

This function is achieved in such a way that, receiving the information of the pupil position of the observer's eye acquired by the video processing means 210L illustrated in the system block diagram of Fig. 2, the modulator drive circuit 220 varies the pattern shape of the mask pattern 141L displayed on the optical modulator 140L in accordance with the view point.

A method for detecting the pupil position of eye can be either of known methods for projecting infrared light to the eye, detecting the border between the white part and black part of the eye from an image of the eye captured by the image sensor 108L, and computing the position of the center of the pupil therefrom, for example.

Fig. 14 is the same figure as the right-side diagram of Fig. 11, in which the left eye observes the original parallax images GL(1), GL(2) and which thus illustrates the state of normal observation of parallax images.

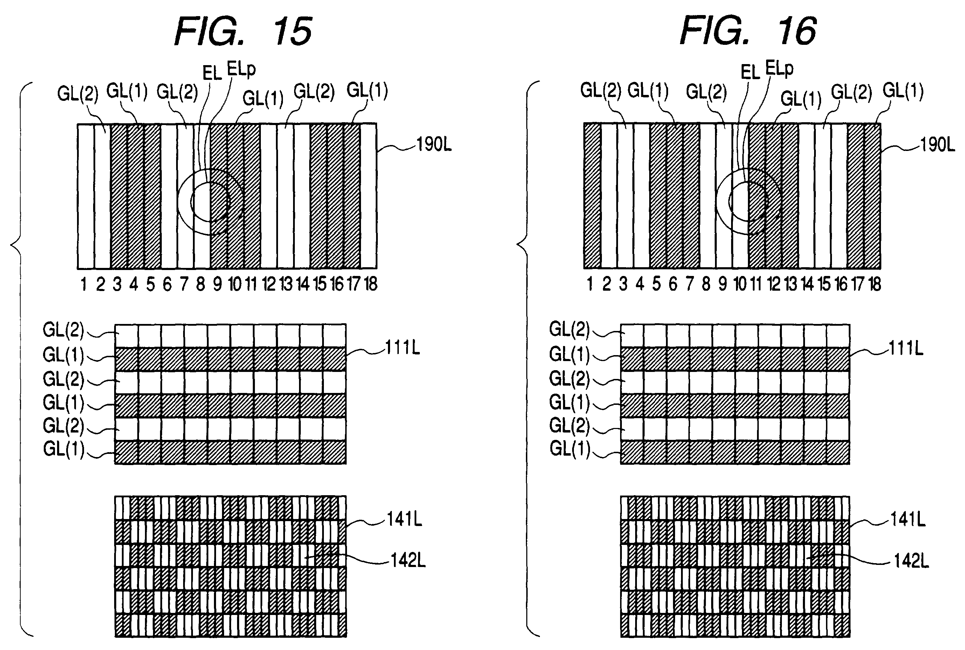

At this time the center of the pupil ELp is located at the border between areas 9 and 10 of the projected parallax image 190L. When the position of the pupil ELp moves from this state, for example, when the center of the pupil ELp is located at the border between areas 8 and 9, as illustrated in Fig. 15, the transmitting portions 142L of the mask pattern 141L are moved one pixel to the left as illustrated, without changing the composite parallax image 111L of the image display device. This causes the projected parallax image 190L to move entirely to the left by the distance of an area corresponding to one pixel.

This control can retain the state in which the center of the pupil is present at the border between the original parallax images GL(1), GL(2), even after the movement of the observer's eye.

When the position of the pupil ELp moves to the right up to a state in which the center of the pupil ELp is located at the border between areas 10, 11 of the projected parallax image 190L as illustrated in Fig. 16, the transmitting portions 142L of the mask pattern 141L are moved one pixel to the right as illustrated, without changing the composite parallax image 111L of the image display device, whereby the projected parallax image 190L moves to the right by the distance of the area corresponding to one pixel.

When the pupil ELp moves further from this state to the right and goes into the state of Fig. 17, the projected parallax image 190L can be moved further to the right by the distance of the area corresponding to one pixel by further moving the mask pattern 141L one pixel to the right as illustrated.

When like control is carried out against movement of the pupil of the observer, the apparatus can maintain the state in which the center of the pupil is present at the border between the original parallax images GL(1), GL(2) and under the same sequence thereof.

Although the above described the action for the left eye, the same can also apply to the right eye.

As described above, the present embodiment uses the two original parallax images for each of the left and right eyes, i.e., the four original parallax images in total and is set to display the mask patterns while successively switching them in accordance with the pupil positions of the left and right eyes, control the projected parallax image areas corresponding to the left and right eyes in accordance with the pupil positions of the left and right eyes, and make the two different parallax images independently observed through each of the pupils of the left and right eyes, thereby simultaneously effecting the convergence function by the binocular parallax images and the accommodation function of the eyes and thus enabling to provide the stereoscopic image display apparatus with little fatigue of the eyes.

In the present invention the apparatus may also be arranged to guide a plurality of original parallax images to at least one of the left and right eyes.

(Embodiment 2)

Embodiment 1 of the present invention was the stereoscopic image display apparatus enabling each of the left and right eyes to observe the two parallax images.

In contrast with it, Embodiment 2 provides the stereoscopic image display apparatus enabling each of the left and right eyes to observe three or more parallax images, which permits observation of stereoscopic image while relaxing the contradiction more between the convergence function by the binocular parallax images and the accommodation function of the both eyes and which is relaxed in required position accuracy concerning the tracking control of the pupil positions.

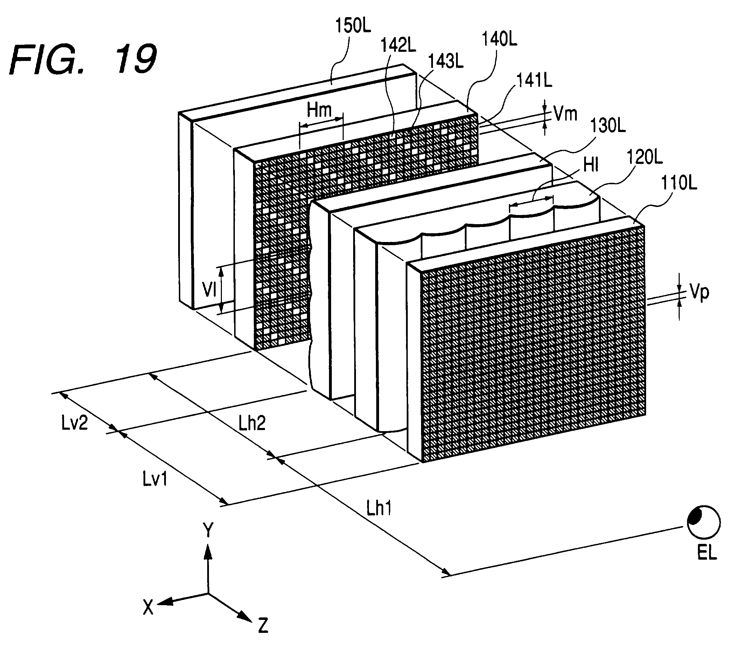

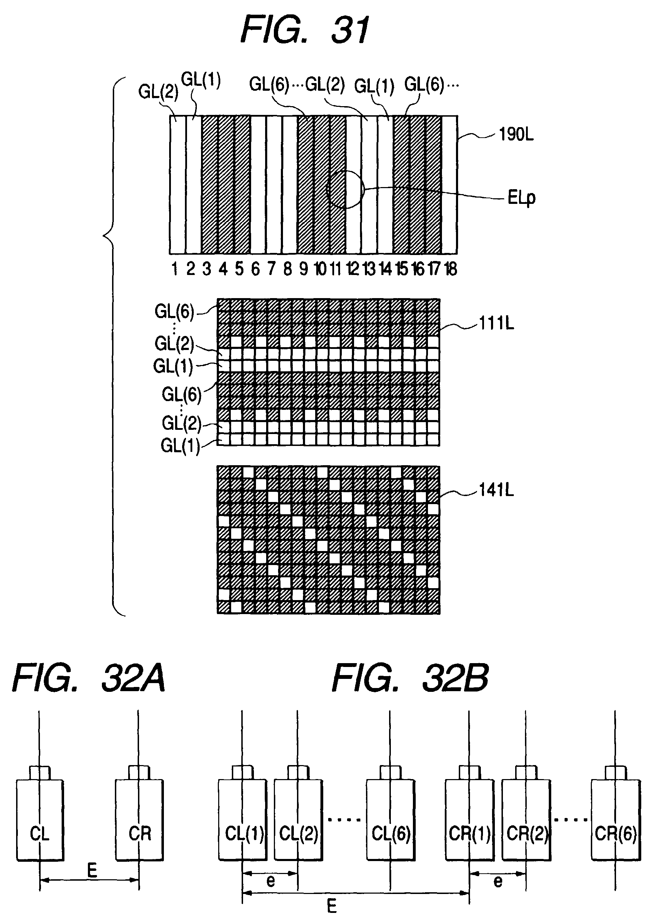

The stereoscopic image display apparatus of Embodiment 2 will be described with placing the focus mainly on the difference from Embodiment 1, by reference to Figs. 19 to 32A and 32B. The whole mechanism diagram of Fig. 1 and the system block diagram of Fig. 2 are also applied to Embodiment 2.

Fig. 19 is a schematic diagram to show the major part of the display portion for the left eye, which corresponds to Fig. 3 of Embodiment 1. The display portion for the right eye also has the like structure.

In the following description members having the function comparable to those in Embodiment 1 will be denoted by identical reference numbers. Embodiment 2 is different from Embodiment 1 in the contents of the composite parallax image displayed on the image display device 110L, in the contents of the mask pattern 141L displayed on the optical modulator 140L, and in the specifications of the vertical lenticular lens 120L and the lateral lenticular lens 130L in accordance therewith.

Namely, in Embodiment 2 the composite parallax image is comprised of six original parallax images and one pitch of the pattern of the transmitting portions and shield portions of the mask pattern 141L is comprised of six pixels.

The pitch of each of the vertical and lateral lenticular lenses 120L, 130L is a value corresponding to six pixels.

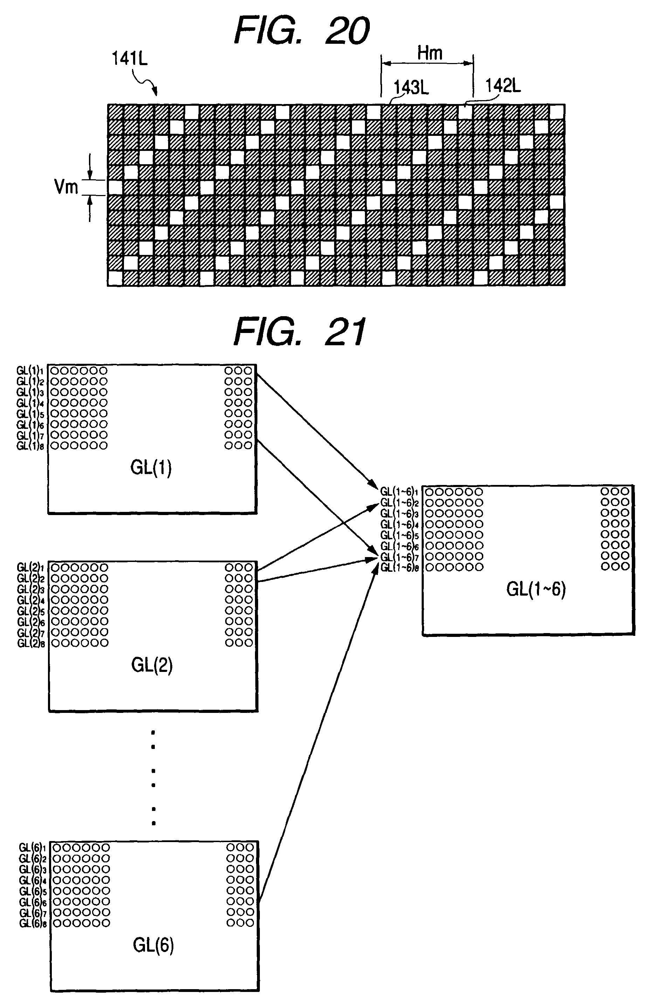

Now, the mask pattern 141L composed of the aperture portions and shield portions displayed on the display surface of the optical modulator 140L will be described referring to Fig. 20. Fig. 20 is a front elevation of the mask pattern 141L illustrated in Fig. 19.

As illustrated in the figure, the mask pattern 141L is composed of the aperture portions 142L and shield portions 143L having the horizontal pitch Hm and the vertical width Vm.

The horizontal pitch Hm is comprised of m pixels where m is an integer not less than 2, and the vertical width Vm is comprised of one pixel. The figure shows the case of m = 6.

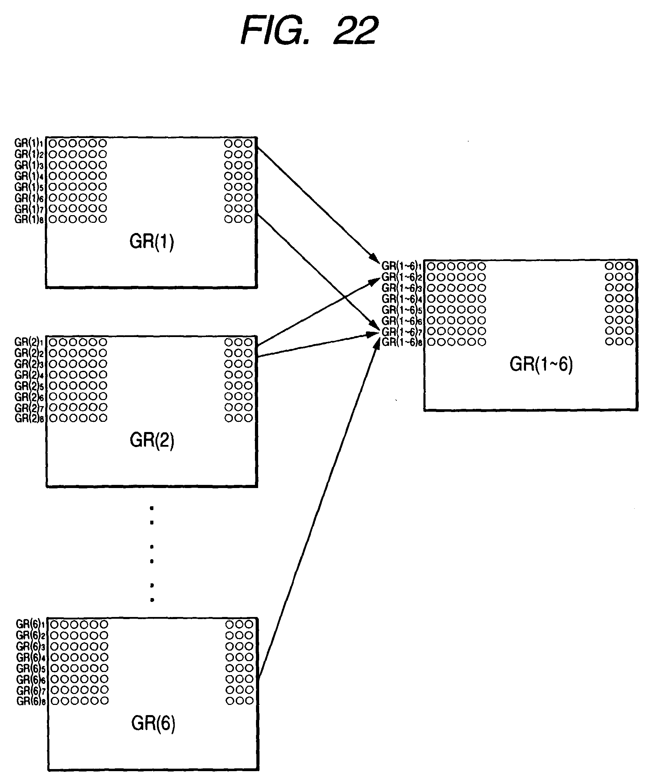

Next, the composite parallax image displayed on the image display 110L will be explained referring to Fig. 21 and Fig. 22.

For the left eye, as illustrated in Fig. 21, the composite parallax image GL(1-6) is produced by dividing six original parallax images GL(1) to GL(6) for the left eye into a lot of stripe images of the horizontal stripe shape as illustrated and rearranging the element stripe images GL(1)i to GL(6)i line by line on the scan lines.

Similarly, for the right eye, as illustrated in Fig. 22, the composite parallax image GR(1-6) is produced by dividing six original parallax images GR(1) to GR(6) for the right eye into a lot of stripe images of the horizontal stripe shape as illustrated and rearranging the element stripe images GR(1)i to GR(6)i line by line on the scan lines.

Next, a method for producing these original parallax images will be described referring to Figs. 32A and 32B.

Under the conditions that E is the standard eye-to-eye distance and e is a value not more than half of the standard pupil diameter p of eyes, images are taken by cameras CL(1) to CL(6) for the left eye and cameras CR(1) to CR(6) for the right eye placed as illustrated, and the images thus taken are used as the original parallax images. It is, however, noted that the values of E and e may also be set arbitrarily while maintaining the ratio e/E, in accordance with the photographing conditions and observation conditions, as in the case of Embodiment 1.

These original parallax images may also be images produced by CG, of course.

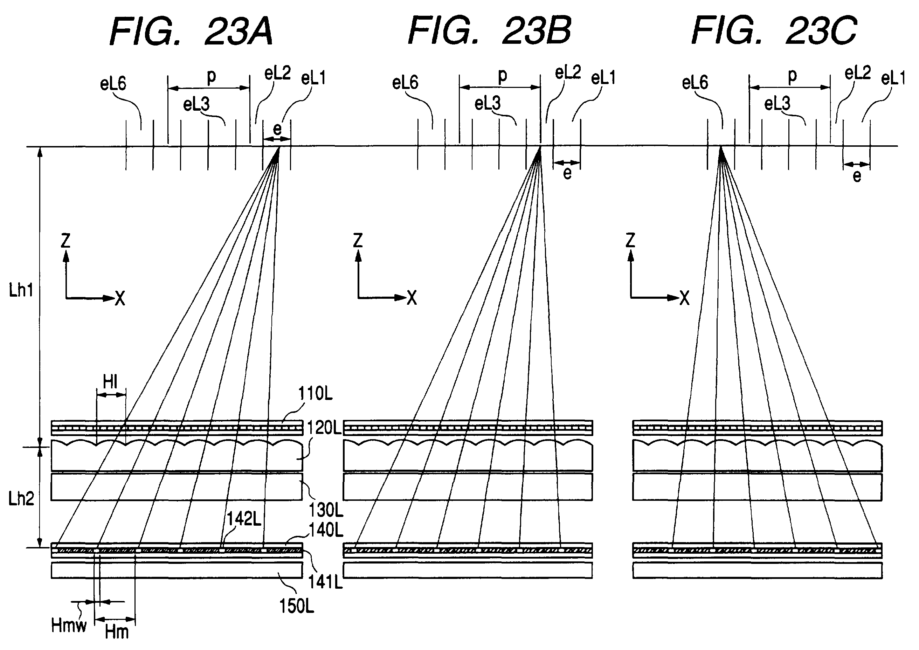

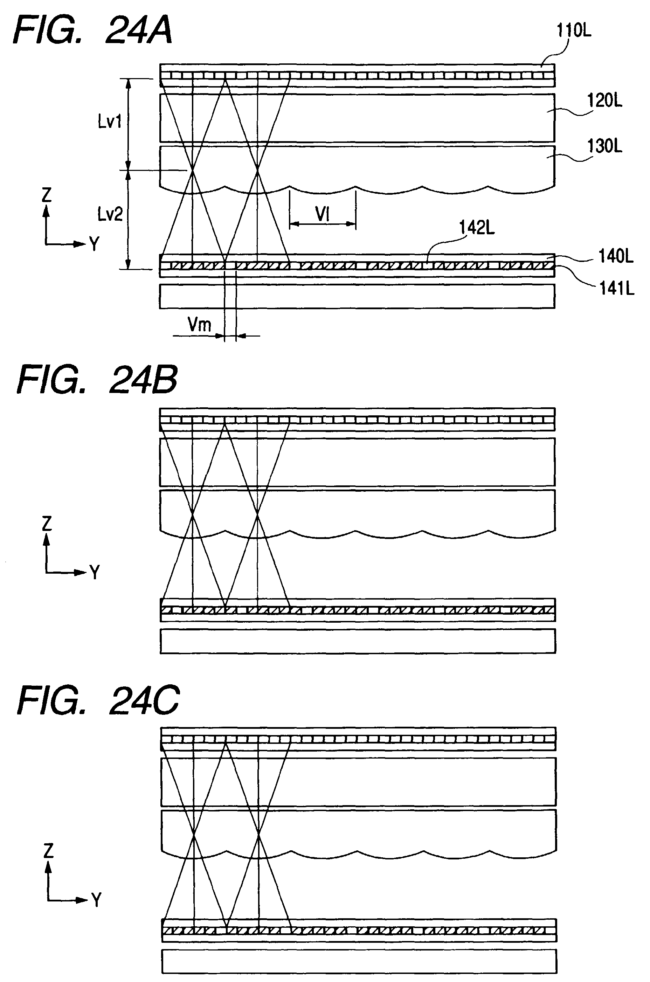

Next described are the details of the display of the composite parallax image by reference to Figs. 23A to 23C and Figs. 24A to 24C. Figs. 23A to 23C are horizontal cross-sectional views (X-Z cross sections) of the image display portion of Fig. 19. The structure and action for the right eye are also similar to those for the left eye except for the difference of the composite parallax image displayed, and thus the description thereof will be omitted.

In the same figures, the light from the backlight light source 150L emerges from the aperture portions 142L of the mask pattern 141L of the optical modulator 140L to travel through the lateral cylindrical lenses 130L. (In this cross-sectional direction the lateral lenticular lens 130L has no specific action.)

Then beams of the transmitted light by the mask pattern 141L are projected through the respective cylindrical lenses forming the vertical lenticular lens 120L into an area eL1, as illustrated in Fig. 23A, in the form of a stripe beam having the width e at the observation position of the observer.

The beams projected into this area eL1 are modulated by the composite parallax image displayed on the image display device 110L provided between the vertical lenticular lens 120L and the observer. In this cross section, the beams travel, for example, through the element stripe parallax images GL(1)1, GL(1)7, GL(1)13,... of the original parallax image GL(1) illustrated in Fig. 21 and compose a projected stripe beam having the width e at the observation position.

Similarly, as illustrated in Fig. 23B, beams in a cross section corresponding to a scan line one line below that of Fig. 23A are projected into an area eL2. The beams projected into this area eL2 are modulated by the composite parallax image displayed on the image display device 110L provided between the vertical lenticular lens 120L and the observer. In this cross section, the beams travel through the element stripe parallax images GL(2)2, GL(2)8, GL(2)14,... of the original parallax image GL(2) illustrated in Fig. 21 and compose a projected stripe beam having the width e at the observation position.

In the same manner thereafter, beams projected into the area e6 are beams passing through the element stripe parallax images GL(6)6, GL(6)12, GL(6)18,... of GL(6) as illustrated in Fig. 23C.

Figs. 24A to 24C are vertical cross-sectional views (Y-Z cross sections) of the display portion of Fig. 19.

In this cross section the aperture portions 142L of the mask pattern 140L illuminated by the backlight light source 150L are configured to be imaged at such a magnification as to equate the pixel width of the optical modulator 140L with the pixel width of the image display device 110L on the image display surface of the image display device 110L by the action of the lateral lenticular lens 130L. Therefore, for example, only the element stripe images of the original parallax image of GL(1) are projected by properly setting the positions of the optical modulator 140L, the image display device 110L, and the lateral lenticular lens 130L.

Similarly, in a pixel column one pixel next to that of Fig. 24A only the element stripe images of the original parallax image GL(2) are projected as illustrated in Fig. 24B.

In the same manner thereafter, only the element stripe images of the original parallax image GL(6) are projected in Fig. 24C.

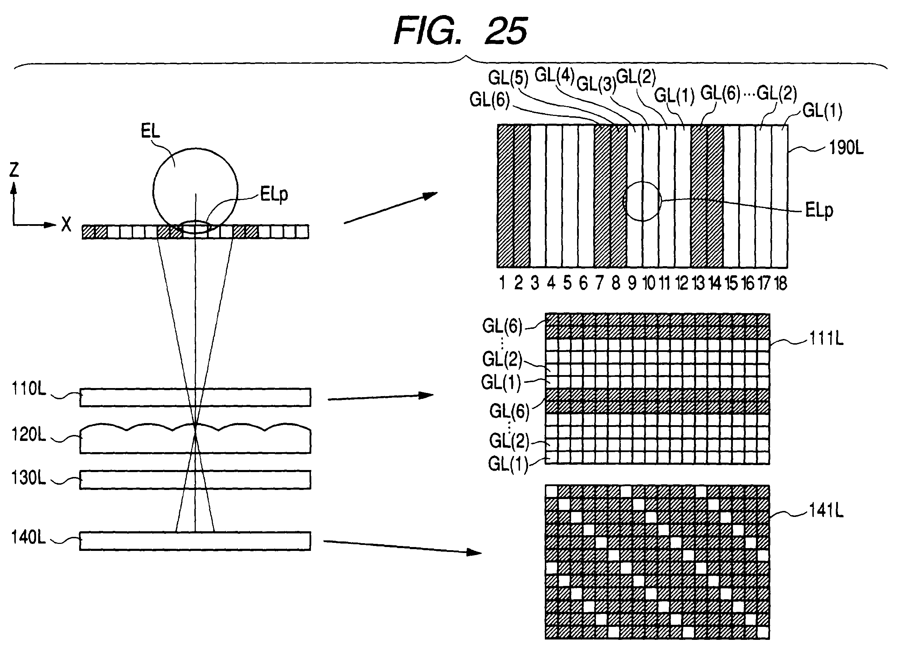

When the pupil diameter of the observer's left eye is p and then the pupil is placed at the position illustrated in Figs. 23A to 23C, three or more stripe projected images are incident to the pupil of the observer. Fig. 25 to Fig. 27 are explanatory diagrams to explain this action in easy-to-understand manner.

In Fig. 25, the drawing on the left side shows the principal part of the horizontal cross-sectional view (X-Z cross section) of the display portion and on the right side there are the mask pattern 141L of the optical modulator 140L, the composite parallax image 111L displayed on the image display device 110L, and the projected parallax image 190L projected to the position of the observer.

The projected parallax image 190L consists of the original parallax images GL(1) to GL(6) and Fig. 25 shows the situation in the normal observation state in which the center of the pupil ELp of the left eye EL of the observer is located at the border position between the original parallax images GL(3) and GL(4) and in which the original parallax images of GL(2) to GL(5) are incident in the correct order to the pupil.

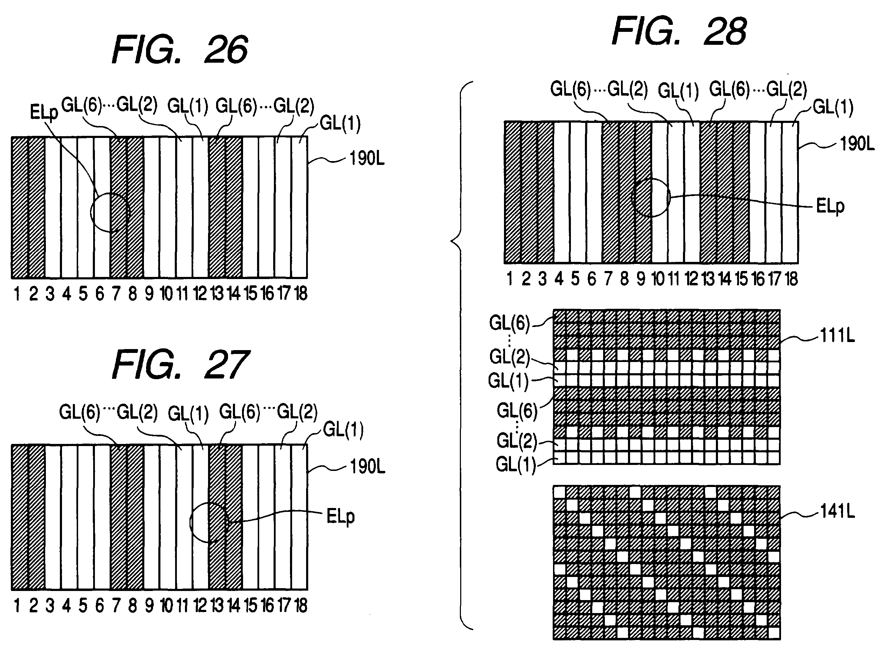

If the observer moves from this state to the left, for example, up to the state of Fig. 26 or to the right, for example, up to the state of Fig. 27, the original parallax images incident to the pupil will include a portion of the reverse order of parallax and it will cause an abnormal state different from the state in which the observer observes normal real scenes.

Next described using Fig. 28 to Fig. 31 is the function of always enabling the observation of parallax images in the normal order even with change in the pupil position of the observer's eye.

The apparatus of the present Embodiment 2 is also constructed in such structure, similar to Embodiment 1, that, receiving the information about the pupil position of the observer's eye acquired by the video processing means 210L illustrated in the system block diagram of Fig. 2, the modulator drive circuit 220 varies the pattern shape of the mask pattern 141L displayed on the optical modulator 140L in accordance with the view point.

Fig. 28 is the same figure as the diagram on the left side of Fig. 25, in which the original parallax images GL(2) to GL(5) are projected onto the pupil ELp, and shows the state of normal observation of parallax images.

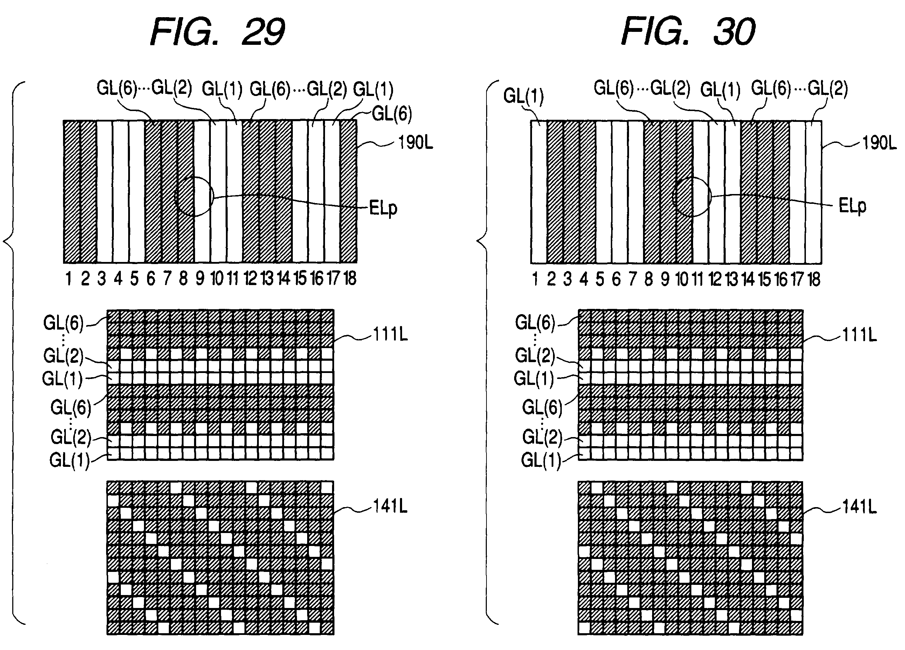

At this time the center of the pupil is located at the border between the areas 9, 10 of the projected parallax image 190L. When the position of the pupil ELp moves from this state, for example, when the center of the pupil is located at the left next border between the areas 8, 9 as illustrated in Fig. 29, the transmitting portions 142L of the mask pattern 141L are moved one pixel to the left as illustrated, without changing the composite parallax image 111L on the image display device. This causes the projected parallax image 190L to move to the left by the distance of the area corresponding to one pixel.

This control can retain the state of the original parallax images GL (2) to GL(5) incident to the pupil in spite of the movement of the observer's eye.

When the position of the pupil ELp moves to the right and goes into the state in which the center of the pupil is located at the border between the areas 10, 11 of the projected parallax image 190L as illustrated in Fig. 30, the transmitting portions 142L of the mask pattern 141L are moved one pixel to the right as illustrated, without changing the composite parallax image 111L on the image display device 110L, whereby the projected parallax image 190L is moved to the right by the distance of the area corresponding to one pixel as illustrated. When the observer further moves from this state to the right up to the state of Fig. 31, the mask pattern 141L is moved further one pixel as illustrated, without changing the composite parallax image 111L, whereby the projected parallax image 190L can be moved further to the right by the distance of the area corresponding to one pixel.

By carrying out the like control against observer's motion to the left or to the right thereafter, the state of the original parallax images GL(2) to GL(5) incident to the pupil is maintained in spite of the movement of the pupil position.

As described above, the composite parallax images are displayed while being switched according to the pupil positions of the left and right eyes, using six images for each of the left and right eyes, i.e., using totally twelve original parallax images, so as to control the projected parallax image areas corresponding to the left and right eyes in accordance with the pupil positions of the left and right eyes, whereby the observer can observe a plurality of different parallax images through each of the pupils of the left and right eyes. This enables to provide the stereoscopic image display apparatus with little fatigue of eyes while simultaneously effecting the convergence function by the binocular parallax images and the accommodation function of the eyes.

The above apparatus was described as to the case of m = 6, but the number of original parallax images incident to the pupil can be increased by increasing m, and a margin can be made in the tracking accuracy of the pupil positions by keeping constant the number of original parallax images incident to the pupil.

In cases wherein the number of parallax images used is large, the observer observes images with degraded resolution in the vertical direction in the above structure, but, in order to avoid this degradation of resolution, it is effective to employ a method of time-division display to display the mask patterns and the composite parallax images in synchronism with each other.

The present invention can present the following effects.

(a) Since the plurality of parallax images are projected to each of the pupils of the left and right eyes of the observer, the stereoscopic observation with little fatigue is allowed while the contradiction is relieved between the binocular convergence and the accommodation function.

(b) Since the projection positions of the parallax images are controlled so as to follow the pupil positions of the eyes even with occurrence of positional deviation between the observer's eyes and the display devices, the parallax images can be kept in the normal state of the projection order of the parallax images incident to the pupil.

(c) When the number of parallax images projected is increased, the contradiction can be relieved more between the binocular convergence and the accommodation function.

(d) When the number of parallax images projected is increased, the margin is made in the tracking control of the pupil positions of the eyes and it makes the production easier.

(Embodiment 3)

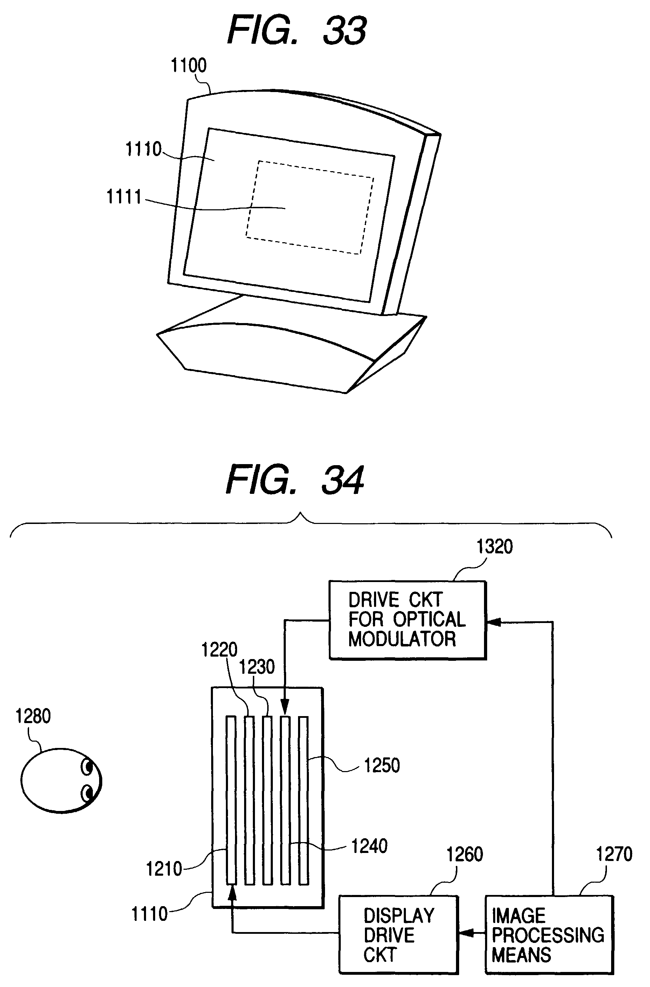

Embodiment 3 of the stereoscopic image display apparatus of the present invention will be described referring to Figs. 33 to 47 and Figs. 64 to 66.

Fig. 33 is a diagram to show the appearance of Embodiment 3 of the present invention.

In the same figure, numeral 1100 denotes the main body to show the whole of the stereoscopic image display apparatus. Numeral 1110 denotes an image display portion. Numeral 1111 represents a stereoscopic image display portion for displaying a stereoscopic image, inside the image display portion 1110.

Fig. 34 is a system block diagram for explaining the system of Embodiment 3 of the present invention.

In the same figure, the image display portion 1110 has a transmission type image display device 1210 of the liquid crystal or the like, an optical modulator 1240 of the liquid crystal or the like having the discrete pixel structure, a light source means 1250, and two lenticular lenses 1220, 1230 having their respective generating line directions perpendicular to each other, which are disposed between the image display device 1210 and the optical modulator 1240.

Stereoscopic images (parallax images) with parallax or ordinary two-dimensional images without parallax are displayed in the image display device 1210. The display area of the parallax images corresponds to the stereoscopic image display portion 1111 of Fig. 33.

The image display device 1210 is driven by display drive circuit 1260 to display an image based on a signal from image processing means 1270 on the display surface thereof.

The optical modulator 1240 is driven by modulator drive circuit 1320 to display the mask pattern described hereinafter in the area corresponding to the stereoscopic image display portion 1111 of the image display device 1210 and a uniform density in the two-dimensional image display area, on the display surface thereof.

The modulator drive circuit 1320 accepts the information about the size and position of the stereoscopic image display portion 1111 displayed in the image display device 1210, and a synchronous signal of image display from the image processing means 1270, and controls the pattern shape of the mask pattern and the display position of the pattern, based on this information.

Numeral 1280 indicates an observer of the stereoscopic image display apparatus (display).

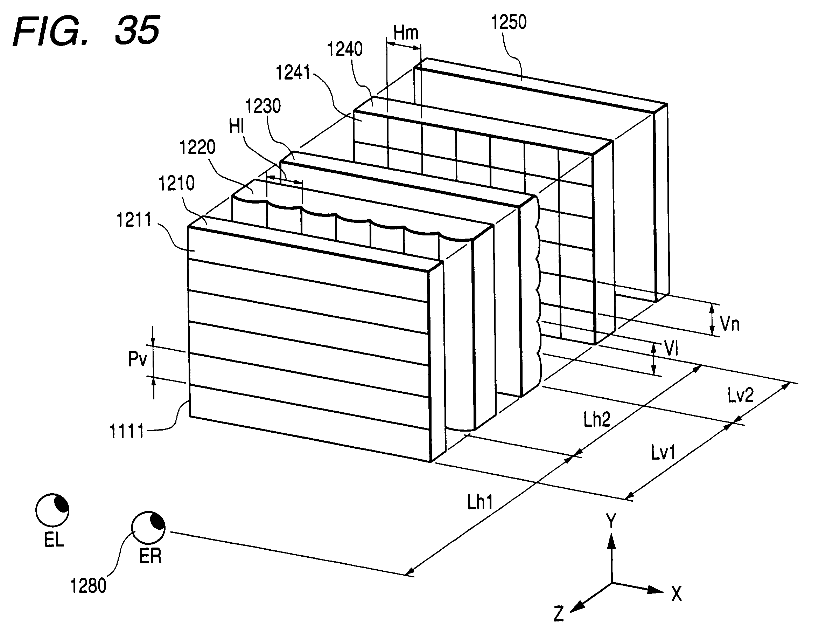

Fig. 35 is a schematic diagram to show the major part of the stereoscopic image display portion 1111.

In Fig. 35, numeral 1250 denotes the light source means, and 1240 the optical modulator, on the display surface of which the mask pattern 1241 acting as an optical barrier is formed.

Numeral 1230 designates the lateral lenticular lens (lateral cylindrical lens array) having the generating line along the horizontal direction (X-direction), which is comprised of a lot of lateral cylindrical lenses of the plano-convex shape arranged in the vertical direction (Y-direction). The lateral lenticular lens 1230 is configured to have such a lens curvature as to image the mask pattern 1241 on the image display surface of the image display device 1210. Further, the lens pitch (width) V1 of the lateral lenticular lens 1230 is so set as to correspond to the vertical width Vn of one unit pattern consisting of a plurality of transmitting portions and shield portions of the mask pattern 1241.

Numeral 1220 designates the vertical lenticular lens (vertical cylindrical lens array) having the generating line along the vertical direction, which is comprised of a lot of vertical cylindrical lenses of the plano-convex shape arranged in the horizontal direction. Each cylindrical lens forming the vertical lenticular lens 1220 is designed to have such a lens curvature as to image the mask pattern 1241 at the observation position (1280).

The horizontal width Hm of one unit pattern consisting of a plurality of transmitting portions and shield portions of the mask pattern 1241 is so set as to correspond to one pitch (the width) H1 of a vertical cylindrical lens of the vertical lenticular lens 1220.

The image display device 1210 displays the composite parallax image 1211 consisting of a plurality of units, each unit including an image composed of n original parallax images.

One unit of the mask pattern 1241 corresponds to one unit pattern of the composite parallax image 1211 in accordance with the area imaged by the lateral lenticular lens 1230, and the vertical width of one unit of the composite parallax image 1211 is Pv.

Fig. 35 is illustrated with excluding the glass covers, polarizers, electrodes, etc. of the image display device 1210 and the optical modulator 1240.

EL and ER represent the left eye and the right eye of the image observer 1280, respectively.

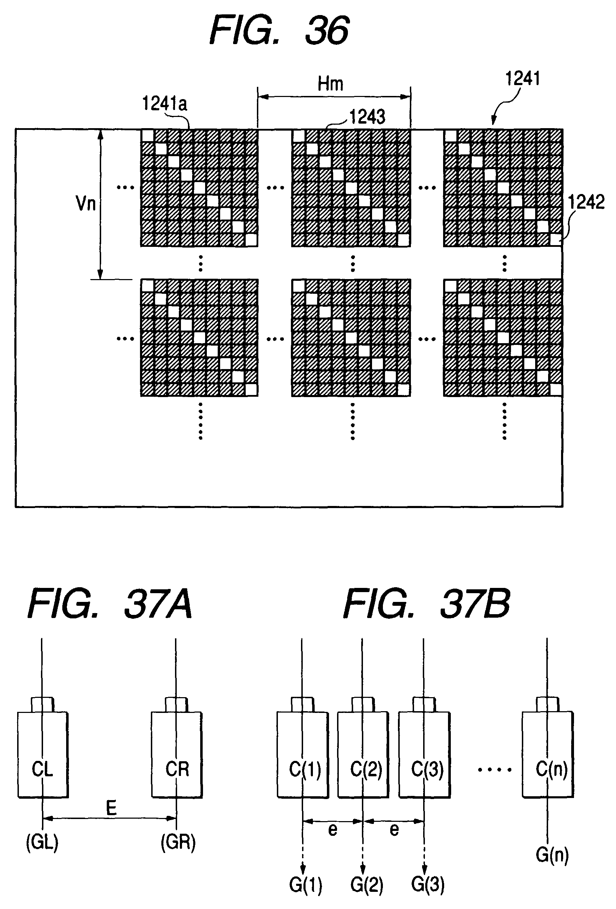

Now, the mask pattern 1241 displayed on the optical modulator 1240 will be described referring to Fig. 36.

Fig. 36 is an enlarged front view of the mask pattern 1241 illustrated in Fig. 35.

As illustrated in Fig. 36, the mask pattern 1241 is comprised of a plurality of unit patterns 1241a, each unit having the horizontal width Hm and the vertical width Vn while consisting of transmitting portions 1242 and shield portions 1243 formed by the pixels of the optical modulator 1240.

Each unit pattern 1241a consists of n pixels vertical and m pixels horizontal, and the transmitting portions 1242 are placed along the diagonal direction of each unit. However, m = n in Embodiment 3.

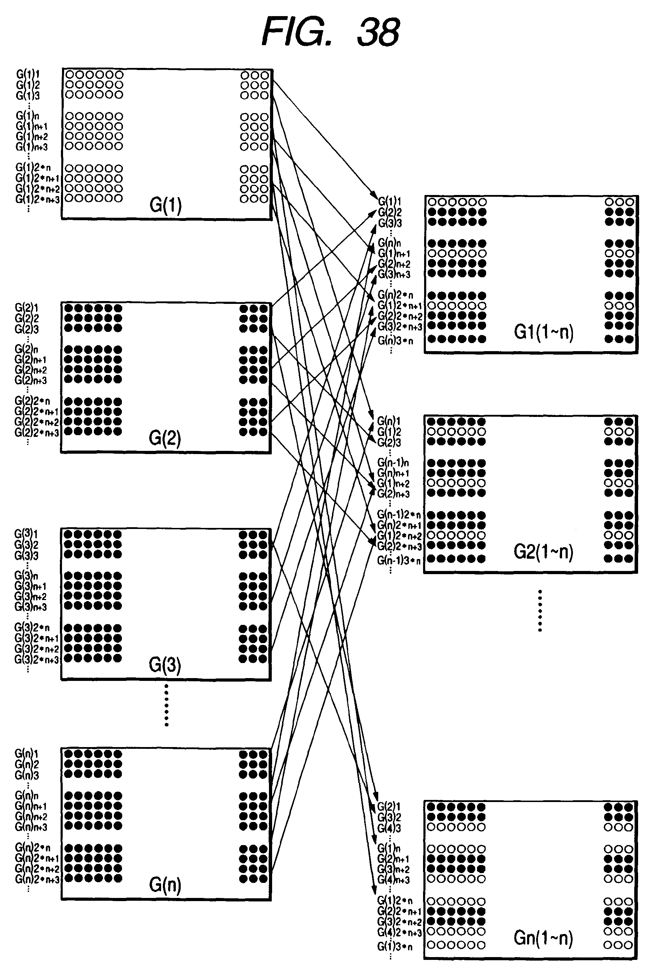

Next, the composite parallax image 1211 displayed on the image display device 1210 will be explained referring to Fig. 37B and Fig. 38.

Figs. 37A and 37B are explanatory diagrams to explain a method for producing parallax images by use of a plurality of video cameras, for example. The production of parallax images by CG is also based on this method.

It is common practice to prepare the parallax images used in the stereoscopic image display apparatus of the binocular parallax image method, using parallax images of the left eye image GL and the right eye image GR taken by two cameras CL, CR corresponding to the left and right eyes of the observer and placed apart at the distance corresponding to the separation E between the two eyes of a man (eye-to-eye distance) as illustrated in Fig. 37A.

Still images may also be photographed by a single camera by moving it in parallel.

However, the parallax images are prepared by properly setting the distance between the optical axes of the cameras (or the distance of the parallel movement) in accordance with such conditions as the size of the display screen, the distance from the observer to the screen, the magnification of the display image to an actual object, and the like.

In contrast with it, the parallax images used in this Embodiment 3 are prepared using the original parallax images of images G(1), G(2),..., G(n) taken by the cameras C(1), C(2),..., C(n) placed as illustrated in Fig. 37B under such a condition that e is a value not more than half of the pupil diameter p of the eyes.

As in the case of the ordinary binocular parallax image method where the distance E between the optical axes of the cameras is set as occasion may demand, the value of the distance e between the optical axes of the cameras may also be set optionally according to the observation conditions in the case of the present embodiment, however.

It is also possible to set virtual cameras in software by CG (Computer Graphics) or the like, make CG images at view points from the respective camera from CG data, and use them as the original parallax images.

Next described referring to Fig. 38 is a method for producing the composite parallax image 1211 displayed on the image display device 1210 from the above original parallax images G(1), G(2),..., G(n).

Each of the n original parallax images G(1), G(2),..., G(n) is divided into stripe images of the lateral stripe shape as illustrated, and the stripe images G(1)i, G(2)i,..., G(n)i, which are the elements of the original parallax images G(1), G(2),..., G(n), are rearranged line by line on scan lines, thereby producing images Gi(1-n) consisting of a plurality of units each unit including n horizontal stripe images.

The images thus obtained are displayed as the composite parallax image 1211 on the image display device 1210. The description will be carried on assuming that the image of G1(1-n) in the figure is displayed.

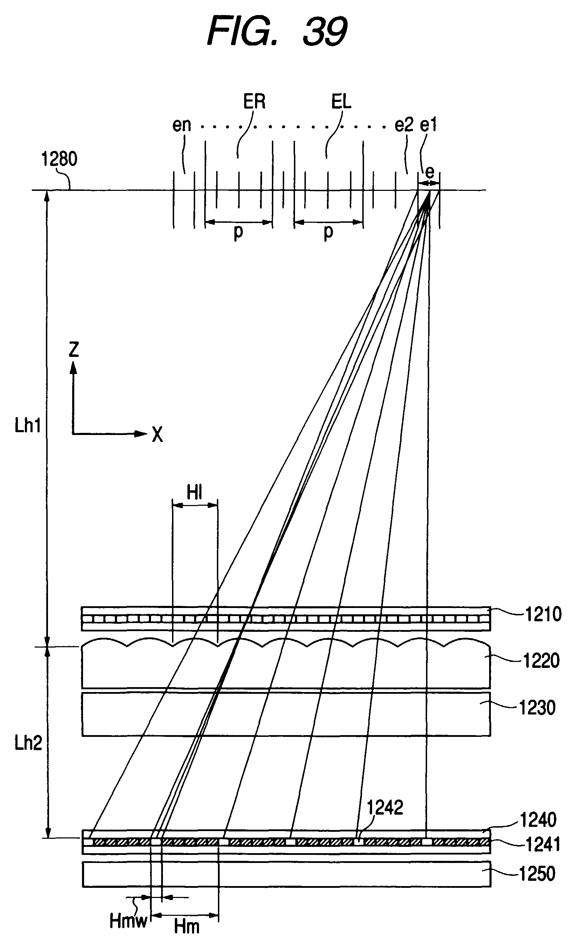

Next, the details of the display of stereoscopic image will be explained referring to Fig. 39 to Fig. 44.

Fig. 39 to Fig. 41 are horizontal cross-sectional views (X-Z cross sections) of the stereoscopic image display portion 1111 of Fig. 35.

In Fig. 39, the light from the light source means 1250 emerges from the transmitting portions 1242 (the width Hmw) of the mask pattern 1241 of the optical modulator 1240 to travel through the lateral cylindrical lenses 1230. (In this cross-sectional direction the lateral lenticular lens has no specific optical action.)

Then beams of the transmitted light from the mask pattern 1241 are projected through the cylindrical lenses forming the vertical lenticular lens 1220 to irradiate an area e1 in the form of a stripe beam having the width e at the observation position of the observer.

The beams projected into this area e1 are modulated by the composite parallax image 1211 displayed on the image display device 1210 provided between the vertical lenticular lens 1220 and the observer.

In this cross section, the beams travel, for example, through the element stripe parallax images G(1)1, G(1)n+1, G(1)2*n+1 ,... of the original parallax image G(1) illustrated in Fig. 38 and are projected into the area e1 in the form of the projected stripe beam having the width e at the observation position.

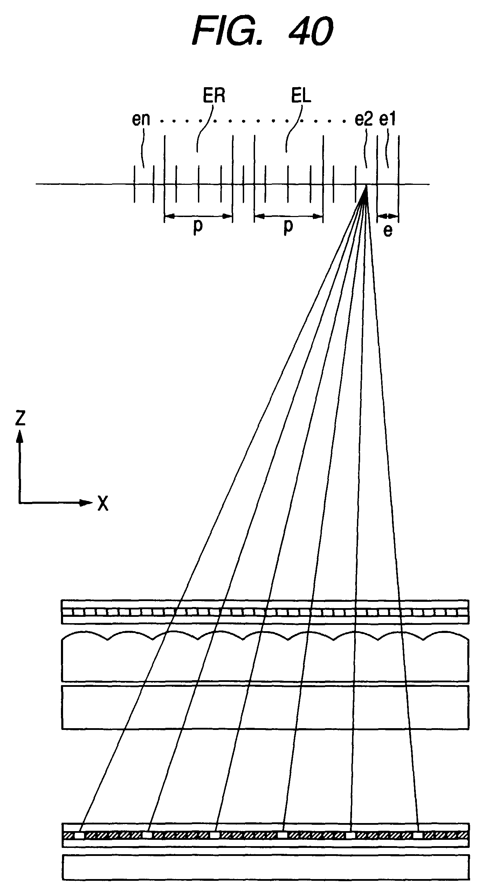

Likewise, as illustrated in Fig. 40, beams in a cross section corresponding to a scan line one line below that of Fig. 39 are projected into an area e2. The beams projected into this area e2 are modulated by the composite parallax image 1211 displayed on the image display device 1210 provided between the vertical lenticular lens 1220 and the observer. In this cross section the beams travel through the element stripe parallax images G(2)2, G(2)n+2, G(2)2*n+2 ,... of the original parallax image G(2) illustrated in Fig. 38 and are projected into the area e2 in the form of a projected stripe beam having the width e at the observation position.

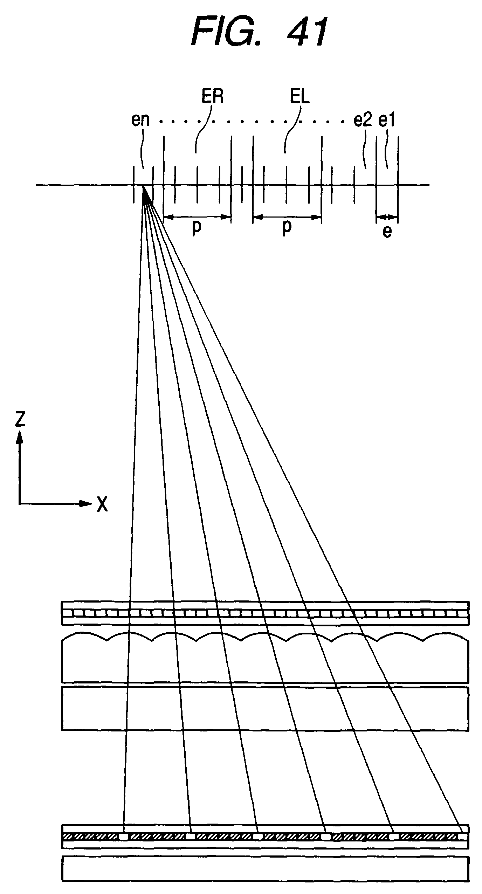

In the same manner thereafter, as illustrated in Fig. 41, beams projected into an area en are beams having passed through the element stripe parallax images G(n)n, G(n)2*n, G(n)3*n,... of G(n).

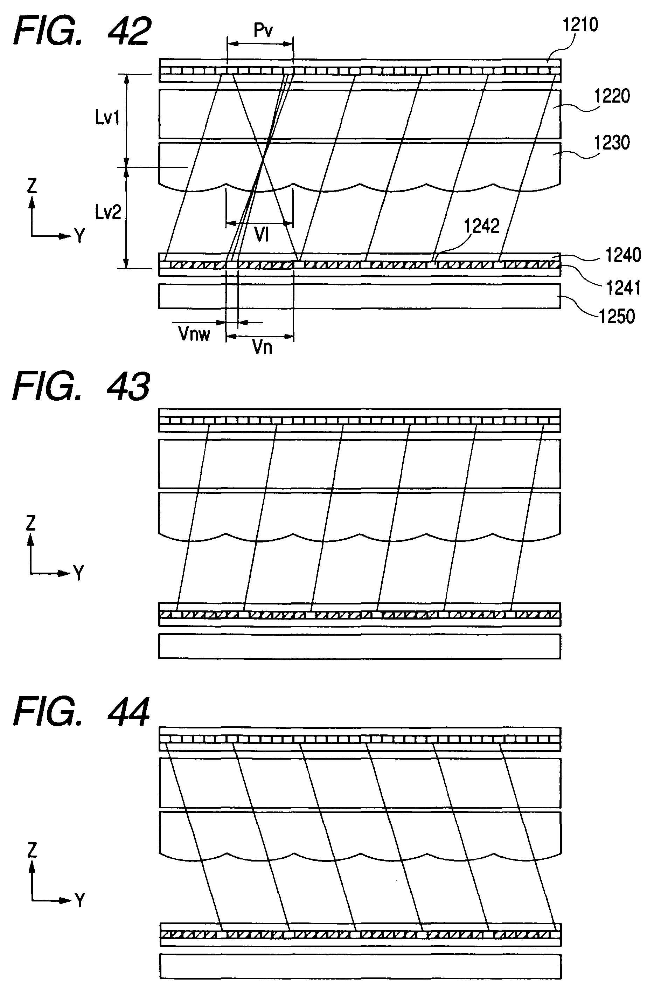

Fig. 42 to Fig. 44 are vertical cross-sectional views (Y-Z cross sections) of the stereoscopic image display portion 1111 of Fig. 35.

In Fig. 42, the transmitting portions 1242 of the mask pattern 1241 illuminated by the light source means 1250 are projected onto the image display surface of the image display device 1210 by the action of the lateral lenticular lens 1230. (In this cross-sectional direction the vertical lenticular lens 1220 has no specific optical action.) On that occasion, the lateral lenticular lens acts so as to equate the width Vn of one unit pattern of the mask pattern 1241 to the width Pv of one unit of the display image and image the transmitting portions (the width Vnw) of the mask pattern 1241 in the pixel width of the display image. Therefore, for example, only the element stripe images of the original parallax image of G(1) are irradiated by properly setting the positions of the optical modulator 1240, the image display device 1210, and the lateral lenticular lens 1230.

Likewise, as illustrated in Fig. 43, only the element stripe images of the original parallax image G(2) are irradiated in a cross section of a pixel column laterally one pixel next to that of Fig. 42.

In the same manner thereafter, only the element stripe images of the original parallax image G(n) are irradiated in Fig. 44.

The structure of the optical system in the stereoscopic image display apparatus of the present invention will be described below by reference to Fig. 39.

As illustrated in Fig. 39, let Lh2 be the distance between the vertical lenticular lens 1220 and the mask pattern 1241 (an optical separation obtained when the distance between the mask-side principal point of the vertical lenticular lens 1220 and the mask pattern 1241 is reduced to a value in air), Lh1 be the distance from the preset observation position 1280 to the vertical lenticular lens 1220 (an optical separation obtained when the distance between the observation position 1280 and the observer-side principal point of the vertical lenticular lens 1220 is reduced to a value in air), Hmw be the horizontal width of the transmitting portions of the mask pattern 1241, Hm be the horizontal width between the adjacent transmitting portions, H1 be the pitch (width) of the vertical cylindrical lenses forming the vertical lenticular lens 1220, E be the eye-to-eye distance, and e be the width of the projected stripe beams at the observation position. Then the system is configured so as to satisfy the following conditions.

It is noted here that e is a value not more than p/2 where p is the pupil diameter of the eyes.

$$e/Hmw = Lh1/Lh2 \tag{1}$$

$$Lh1/(Lh1 + Lh2) = H1/Hm \tag{2}$$

$$Hmw = Hm/m \tag{3}$$

$$e \times n > E \tag{4}$$

When the left and right eyes EL, ER of the observer having the pupil diameter p are placed at the positions illustrated in Figs. 39 to 41, a plurality of, three or more, projected stripe images are incident simultaneously to each of the pupils of the left and right eyes EL, ER of the observer accordingly.

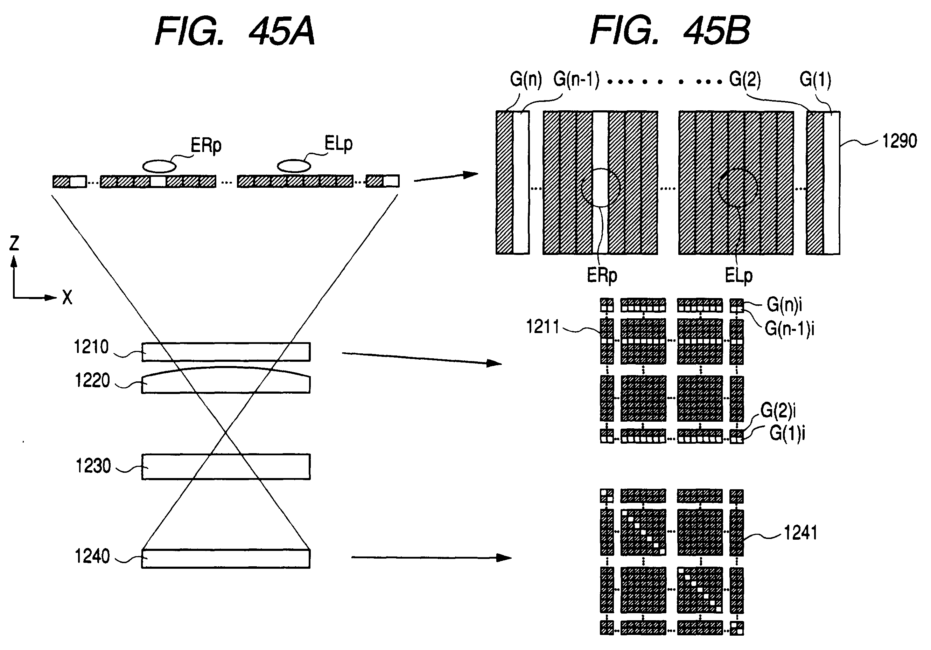

Fig. 45A to Fig. 47 are explanatory diagrams to explain how to effect the stereoscopic vision in this structure.

Fig. 45A is an enlarged view of one pitch of the vertical lenticular lens 1220 in the horizontal sectional view (X-Z cross section) of the stereoscopic image display portion 1111 and Fig. 45B shows the mask pattern 1241 displayed on the optical modulator 1240, the composite parallax image 1211 displayed on the image display device 1210, and the projected parallax image 1290 projected to the observation position.

The projected parallax image 1290 is an image resulting from projection of the parallax images G(1) to G(n) in the vertical stripe shape.

When the pupils ELp, ERp of the left eye EL and the right eye ER of the observer are located at the positions illustrated in Fig. 45B, the observer can simultaneously observe a plurality of parallax images through each of the left and right eyes, whereby the stereoscopic vision is allowed.

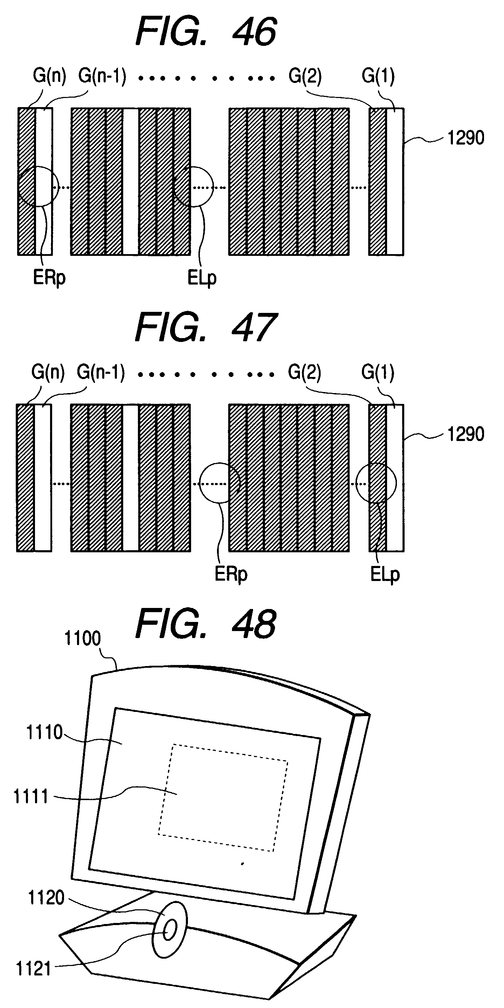

When the observer moves left or right from this state, the normal stereoscopic vision is allowed in the range from the state of Fig. 46 in movement to the right to the state of Fig. 47 in movement to the left.

The above structure and action allow each of the left and right eyes to observe three or more parallax images simultaneously, which enables to provide the stereoscopic image display apparatus with little fatigue of the eyes while simultaneously effecting the convergence function by the binocular parallax images and the accommodation function of the eyes.

In the above description, the larger the number n of original parallax images constituting the composite parallax image 1211, the broader the area of stereoscopic vision, but the lower the vertical resolution of the display image. In order to solve it, the pattern shape of the mask pattern 1241 of the optical modulator 1240 is switched to another in synchronism with switching of the display contents of the image display of the composite parallax image 1211, thereby enhancing the resolution. The number n of original parallax images is determined arbitrarily except for one.

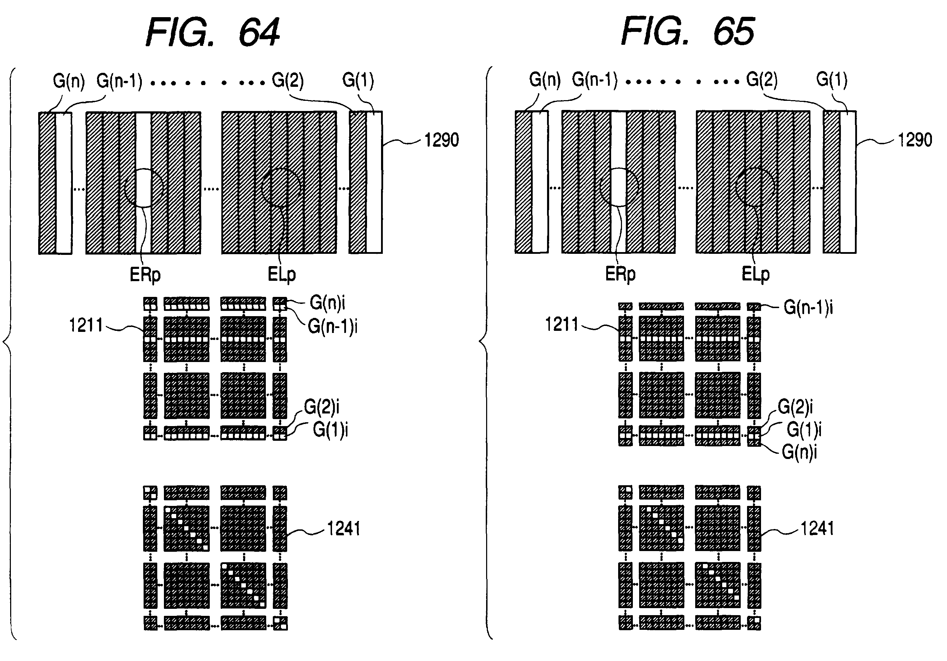

The details of that operation will be described below referring to Figs. 64 to 66.

Fig. 64 is the same figure as Fig. 45B. Let this state be a first state. In a second state time-sequential thereto, as illustrated in Fig. 65, the opening portions of the mask pattern 1241 are moved by one pixel in the vertical direction and the element stripe images G(1)i, G(2)i,..., G(n)i of the composite parallax image 1211 are also moved by one pixel in the vertical direction.

Namely, the display of the composite parallax image is switched to G2(1-n) of Fig. 38.

After this operation, the sequence and position of the parallax images in the projected parallax image 1290 are kept in those in the first state as illustrated.

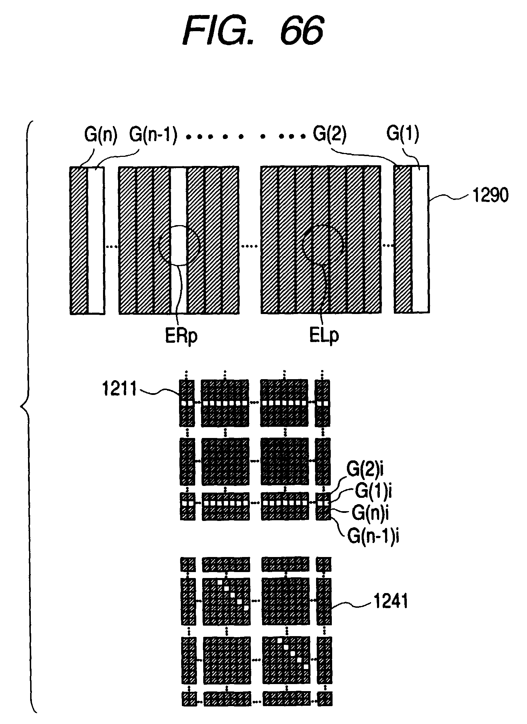

In a third state, as illustrated in Fig. 66, the displays of the mask pattern 1241 and the composite parallax image 1211 are further moved similarly by one pixel. Namely, the opening portions of the mask pattern 1241 are moved by one pixel in the vertical direction and the display of the composite parallax image is also switched to G3(1-n) of Fig. 38.

In this case the sequence and position of the parallax images in the projected parallax image 1290 are also kept in those in the first state as illustrated.

The like operation is carried out thereafter successively to the n-th state, whereby the same element parallax images can be displayed throughout the entire surface on the image display device without altering the sequence and position of the projected parallax images at the observation position.

The stereoscopic image display with improved resolution can be effected by displaying the first to the nth states as a cycle within the time of the after image effect of the eyes.

(Embodiment 4)

Embodiment 4 of the stereoscopic image display apparatus of the present invention will be described next. Embodiment 3 of the present invention, described above, necessitates a lot of original parallax images. In contrast with it, Embodiment 4 presents the minimum number of parallax images to each of the left and right eyes, so as to decrease the number of original parallax images used and relax the contradiction between the convergence function by the binocular parallax images and the accommodation function, thereby providing the stereoscopic image display apparatus permitting the observation of stereoscopic image.

The stereoscopic image display apparatus of Embodiment 4 will be described with placing the focus mainly on the difference from Embodiment 3, referring to Fig. 48 to Fig. 63.

Fig. 48 is a drawing to show the appearance of the stereoscopic image display apparatus in Embodiment 4 of the present invention.

In Fig. 48, the present embodiment is different from Embodiment 3 in that the apparatus of the present embodiment has a pupil position detecting mechanism 1120 for detecting the positions of the pupils of the left and right eyes of the observer. Numeral 1121 designates a video camera, which is a component of the pupil position detecting mechanism.

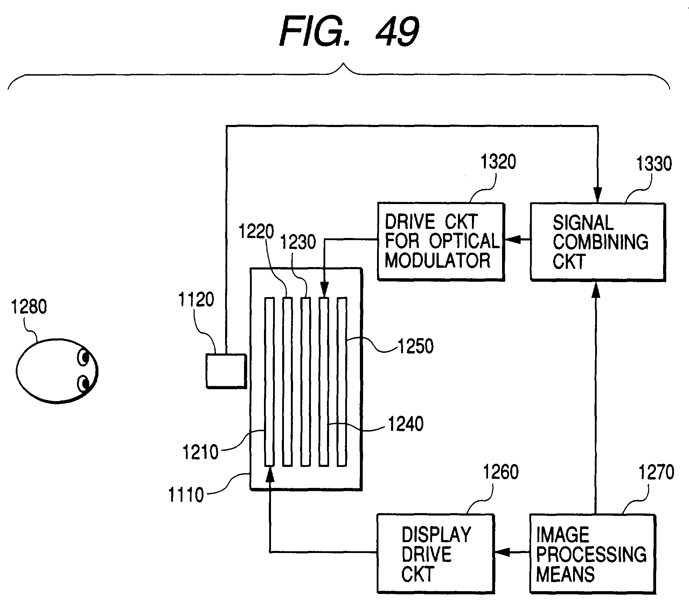

Fig. 49 is a system block diagram of Embodiment 4 of the present invention.

In Fig. 49 the image processing means 1270 outputs the signal of the image to be displayed on the image display device 1210, via the display drive circuit 1260 thereto and the information about the size and position of the stereoscopic image display portion and the synchronous signal of the image displayed on the image display device 1210, to the signal combining circuit 1330.

The pupil position detecting mechanism 1120 outputs the information about the pupil positions of the observer to the signal combining circuit 1330.

The signal combining circuit 1330 generates information for driving the optical modulator 1240, based on these information, and outputs the information to the modulator drive circuit 1320.

The optical modulator 1240 is driven by the modulator drive circuit 1320 to display the mask pattern in the area corresponding to the stereoscopic image display portion and display the uniform density in the area corresponding to the two-dimensional image display portion on the display surface thereof, which is the same as in Embodiment 3, but in Embodiment 4 the pattern shape of the mask pattern 1241 is also varied based on the pupil position information.

The schematic diagram of the major part of Fig. 35 in Embodiment 3 is also applied to Embodiment 4.

The present embodiment is different from Embodiment 3 in the contents of the composite parallax image 1211 displayed on the image display device 1210 and in the contents of the mask pattern 1241 displayed on the optical modulator 1240.

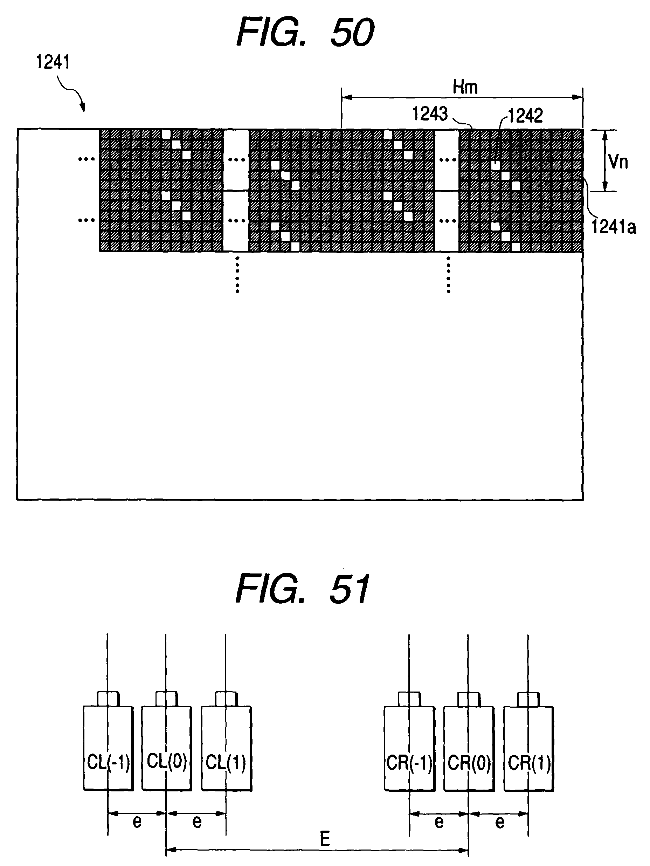

The mask pattern 1241 consisting of the transmitting portions and shield portions displayed in the optical modulator 1240 of Embodiment 4 will be explained referring to Fig. 50.

As illustrated in Fig. 50, the mask pattern 1241 is comprised of a plurality of unit patterns, each unit 1241a having the horizontal width Hm and the vertical width Vn while consisting of transmitting portions 1242 and shield portions 1243 formed by pixels of the optical modulator 1240.

Each unit pattern is composed of n pixels vertical and m pixels horizontal.

In Embodiment 4 the transmitting portions 1242 are provided at only portions corresponding to the left and right eyes of the observer and the other portions are the shield portions as illustrated. The transmitting portions are only three pixels for each of the left and right eyes.

Here n is equal to two times the number of parallax images corresponding to each of the left and right eyes and in Embodiment 4 n = 6. It is, however, noted that n can be any number not less than 6 as occasion may demand.

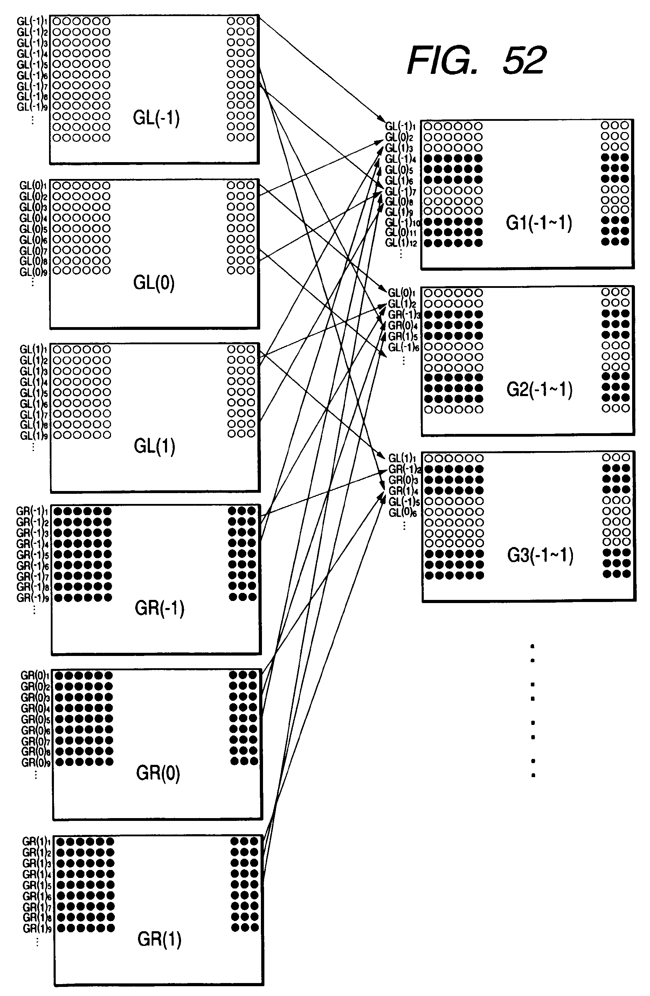

Now, the composite parallax image 1211 displayed on the image display device 1210 of Embodiment 4 will be described referring to Fig. 51 and Fig. 52.

Fig. 51 is an explanatory diagram to explain a method for producing the original parallax images, for example, by use of video cameras. The production of parallax images by CG is also based on this method.

The parallax images used in this Embodiment 4 are prepared by using images GL(-1), GL(0), GL(1), GR(-1), GR(0), GR(1) taken by the cameras for the left eye CL(-1), CL(0), CL(1) and the cameras for the right eye CR(-1), CR(0), CR(1) placed as illustrated under the conditions that E is the eye-to-eye distance and that e is a value not more than half of the pupil diameter p of the eyes, as original parallax images.

It is, however, noted that the distance between the optical axes of the cameras may be set arbitrarily with keeping the value of e/E constant, as in the case of Embodiment 3.

Next, the method for producing the composite parallax image 1211 displayed on the image display device 1210 from the above original parallax images will be described referring to Fig. 52.

Each of the three original parallax images GL(-1) to GL(1) or GR(-1) to GR(1) for each of the left and right eyes is divided into stripe images of the lateral stripe shape as illustrated and the stripe images GL(-1)i to GL(1)i, GR(-1)i to GR(1)i, which are elements of the original parallax images GL(-1) to GL(1), GR(-1) to GR(1), are rearranged line by line on scan lines, thereby forming the composite parallax image Gi(-1 to 1).

The composite parallax image 1211 prepared in this way is displayed on the image display device 1210.

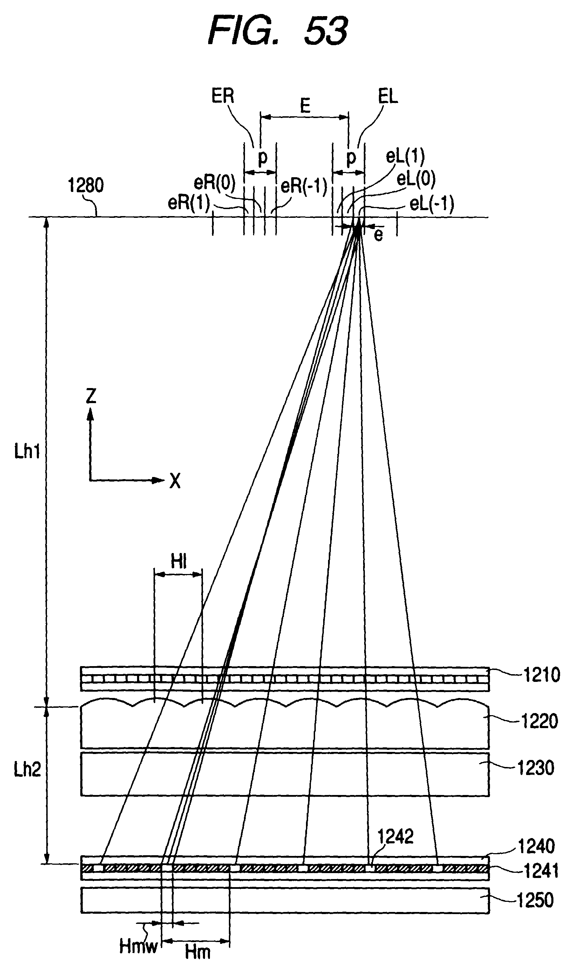

Next, the details of the display of the composite parallax image 1211 will be described using Fig. 53 to Fig. 58.

First explained is an example of the display of G1(-1 to 1) as the composite parallax image 1211.

Fig. 53 to Fig. 55 are horizontal cross-sectional views (X-Z cross sections) of the stereoscopic image display portion 1111 of Fig. 35.

In Fig. 53 the light from the light source means 1250 emerges from the transmitting portions 1242 of the mask pattern 1241 of the optical modulator 1240 to travel through the lateral cylindrical lenses 1230. (In this cross-sectional direction the lateral lenticular lens has no specific action.)

Then the beams of the transmitted light from the mask pattern 1241 are projected through the cylindrical lenses forming the vertical lenticular lens 1220 to irradiate an area eL(-1) in the form of a stripe beam having the width e at the observation position of the observer.

The beams projected into this area eL(-1) are modulated by the composite parallax image 1211 displayed on the image display device 1210 provided between the vertical lenticular lens 1220 and the observer. In this cross section the beams travel, for example, through the element stripe parallax images GL(-1)1, GL(-1)7, GL(-1)13,... of the composite parallax image G1(-1 to 1) illustrated in Fig. 52 to become a projected stripe beam having the width e at the observation position, to be projected into the area eL(-1). Namely, the area eL(-1) is irradiated by the original parallax image GL(-1).

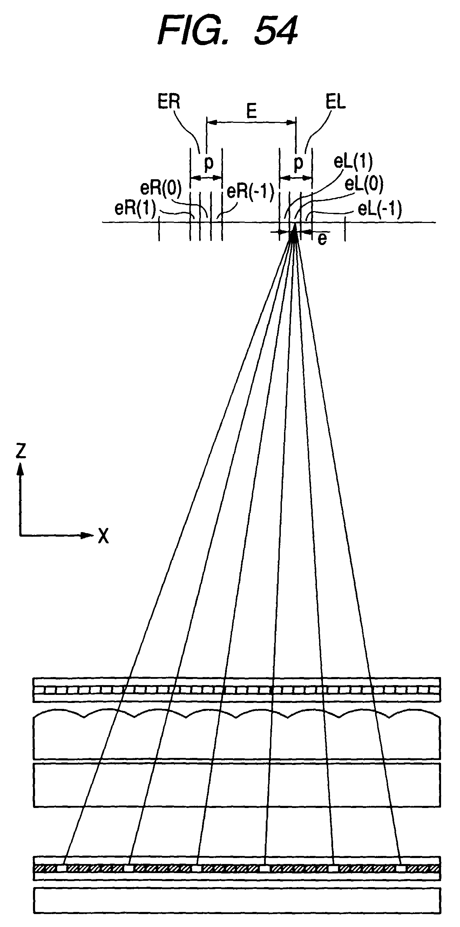

Similarly, as illustrated in Fig. 54, beams in a cross section corresponding to a scan line one line below that of Fig. 53 are projected into an area eL(0). The beams projected into this area eL(0) are modulated by the composite parallax image 1211 displayed on the image display device 1210 provided between the vertical lenticular lens 1220 and the observer. In this cross section the beams travel through the element stripe parallax images GL(0)2, GL(0)8, GL(0)14,... of the composite parallax image G1(-1 to 1) illustrated in Fig. 52 and become a projected stripe beam having the width e at the observation position to be projected into the area eL(0). Namely, the area eL(0) is illuminated by the original parallax image GL(0).

Likewise, the area eL(1) is illuminated by the original parallax image GL(1).

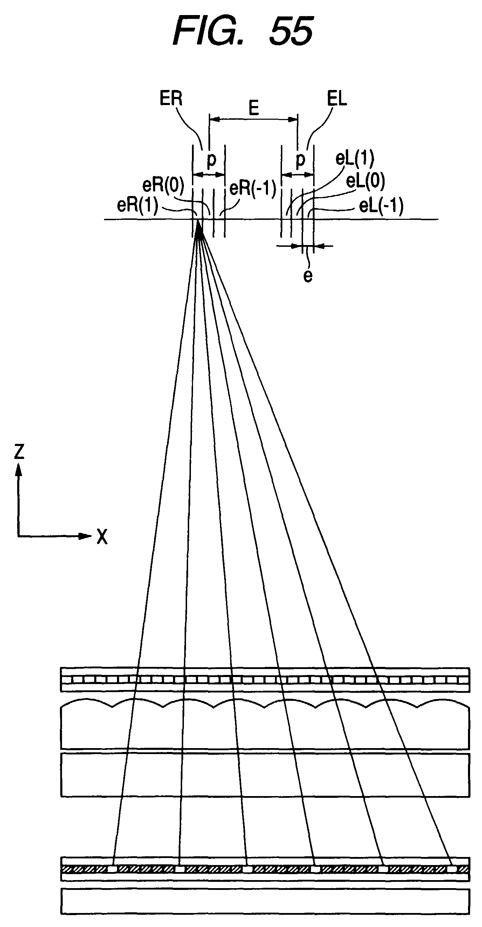

Further, the area eR(-1) is illuminated by the original parallax image GR(-1) as illustrated in Fig. 55.

In the same manner thereafter, the areas eR(0) and eR(1) are illuminated by the original parallax images GR(0), GR(1), respectively.

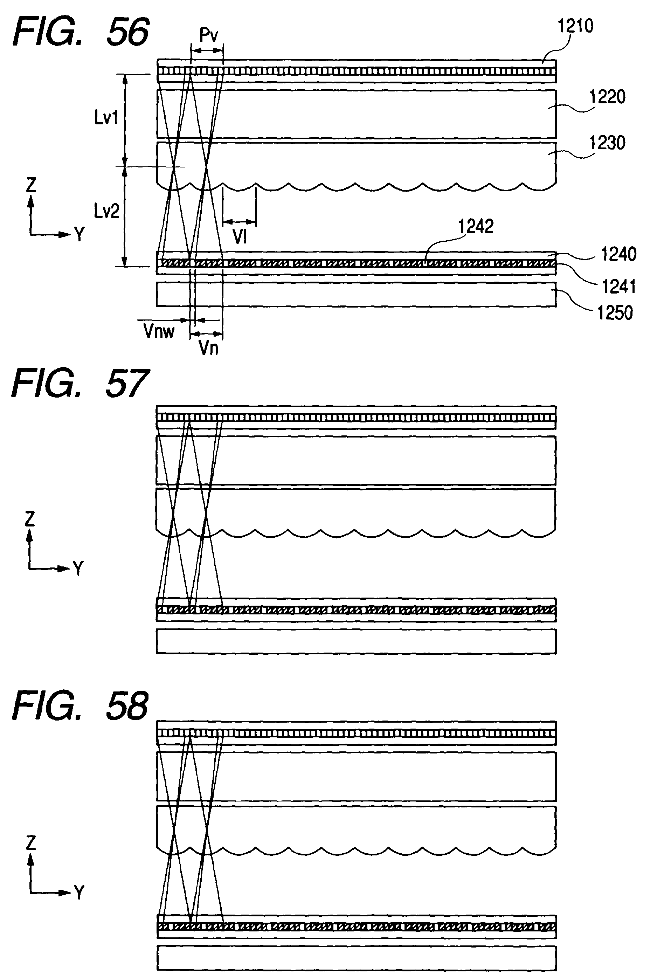

Fig. 56 to Fig. 58 are vertical cross-sectional views (Y-Z cross sections) of the stereoscopic image display portion 1111 of Fig. 35.

In Fig. 56, the transmitting portions 1242 of the mask pattern 1241 illuminated by the light source means 1250 are projected onto the image display surface of the image display device 1210 by the action of the lateral lenticular lens 1230. (In this cross-sectional direction the vertical lenticular lens has no specific action.)

On that occasion, the lateral lenticular lens 1230 acts so as to equate the width Vn of one unit of the mask pattern 1241 to the width Pv of one unit of the display image and image the transmitting portions (the width Vnw) of the mask pattern in the pixel width of the display image. Therefore, for example, only the element stripe images of the original parallax image of G1(-1) are irradiated by properly setting the positions of the optical modulator 1240, the image display device 1210, and the lateral lenticular lens 1230.

Similarly, as illustrated in Fig. 57, only the element stripe images of the original parallax image GL(0) are irradiated in a cross section of a pixel column horizontally one pixel next to that of Fig. 56.

In the same manner thereafter, only the element stripe images of the original parallax image GR(-1) are irradiated in Fig. 58.

Therefore, the parallax images for the left and right eyes are the projected parallax images of the stripe shape independent of each other at the observation position 1280.

On that occasion, as illustrated in Fig. 53 to Fig. 55, the separation between eL(-1) to eL(1) for the left eye and eR(-1) to eR(1) for the right eye is controlled so as to be equal to the pupil distance E of the observer, based on the output from the pupil position detecting means 1120.

How to handle change of the pupil distance due to individual differences or differences of observation distance will be described hereinafter.

In the above structure, when the left and right eyes EL, ER of the observer having the pupil diameter p are located at the positions illustrated in Figs. 53 to 55, a plurality of, two or more, projected stripe images are incident to each of the left and right pupils of the observer.

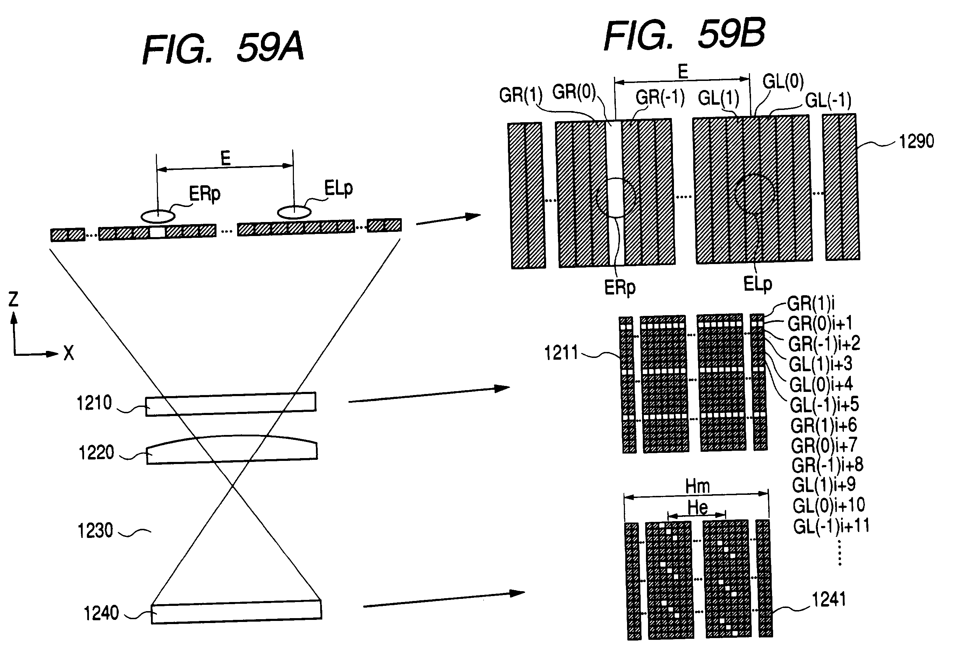

Figs. 59A and 59B are explanatory diagrams to explain how the stereoscopic vision is made in this structure.

Fig. 59A is a horizontal cross-sectional view (X-Z cross section) of the stereoscopic image display portion 1111, which is an enlarged view of one pitch of the vertical lenticular lens, and Fig. 59B shows the mask pattern 1241 displayed on the optical modulator 1240, the composite parallax image 1211 displayed on the image display device 1210, and the projected parallax image 1290 projected to the observer's position 1280.

The projected parallax image 1290 is an image resulting from projection of the original parallax images GL(-1) to GL(1), GR(-1) to GR(1) in the stripe shape.

These figures show the normal observation state of stereoscopic vision in which each of the pupils ELp, ERp of the left eye EL and the right eye ER of the observer is present in the projected parallax image area corresponding to either the left eye or the right eye.

These figures show an example in which each of the left and right eyes observes three parallax images simultaneously.

Next described is the function of always enabling the normal stereoscopic observation even with change in the pupil positions of the observer's eyes because of movement of the observer.

As described referring to Figs. 48 and 49, the apparatus of the present Embodiment 4 has the pupil position detecting means 1120 for detecting the pupil positions of the observer's eyes.

The method proposed before in Japanese Patent Application No. 10-322139 by the inventor et al. can be utilized as the pupil position detecting means 1120 of a non-contact type.

The pattern shape of the mask pattern 1241 displayed on the optical modulator 1240 and the contents of the composite parallax image 1211 displayed on the image display device 1210 are controlled as follows, based on the information obtained by the pupil position detecting means 1120.

Let the state of Fig. 59B be a reference. When the observer moves from this reference state in the lateral direction (X-direction), the transmitting portions and shield portions of the mask pattern 1241 are moved in the horizontal direction (X-direction) without changing the composite parallax image 1211.

An amount of the movement is determined so that a movement of the projected parallax image 1290 due to the movement of the mask pattern 1241 is equal to the moving distance of the pupil positions of the observer.

When the observer moves in the back-and-forth direction (Z-direction) from the reference state, the separation of stripes corresponding to the left and right eyes in the projected parallax image 1290 is altered by varying the spacing He in the horizontal direction (X-direction) of the transmitting portions 1242 of the mask pattern 1241 without changing the composite parallax image 1211.

The above control always allows the proper stereoscopic observation while the projected parallax image 1290 for each of the left and right eyes at the observation position is kept as parallax images corresponding to either the left or right eye.

In the description above the resolution is degraded in the vertical direction, but it is overcome so as to increase the resolution by altering the contents of the mask pattern 1241 and the contents of the composite parallax image 1211 in synchronism as described below, as in the case of Embodiment 3.

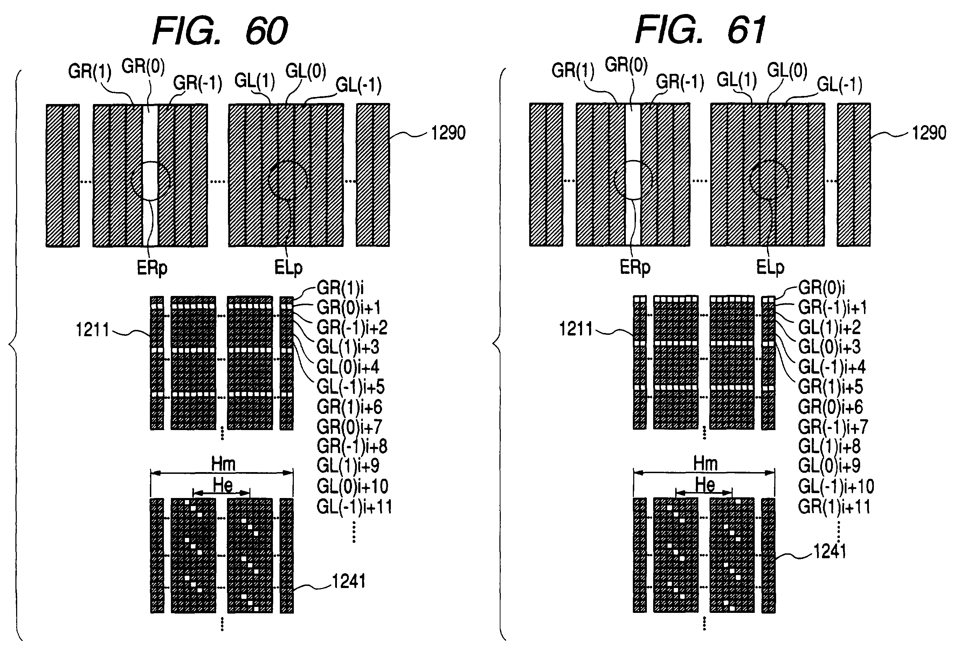

The details of that operation will be described referring to Fig. 60 to Fig. 63.

Fig. 60 is the same figure as Fig. 59B. Let this state be a first state. In a second state time-sequential thereto, as illustrated in Fig. 61, the aperture portions of the mask pattern 1241 are moved by one pixel in the vertical direction and the element stripe images of the composite parallax image 1211 are also moved by one pixel in the vertical direction.

Namely, the display is switched to the composite parallax image G2(-1 to 1) illustrated in Fig. 52.

After this operation, the sequence and position of the parallax images in the projected parallax image 1290 are kept in those in the first state as illustrated.

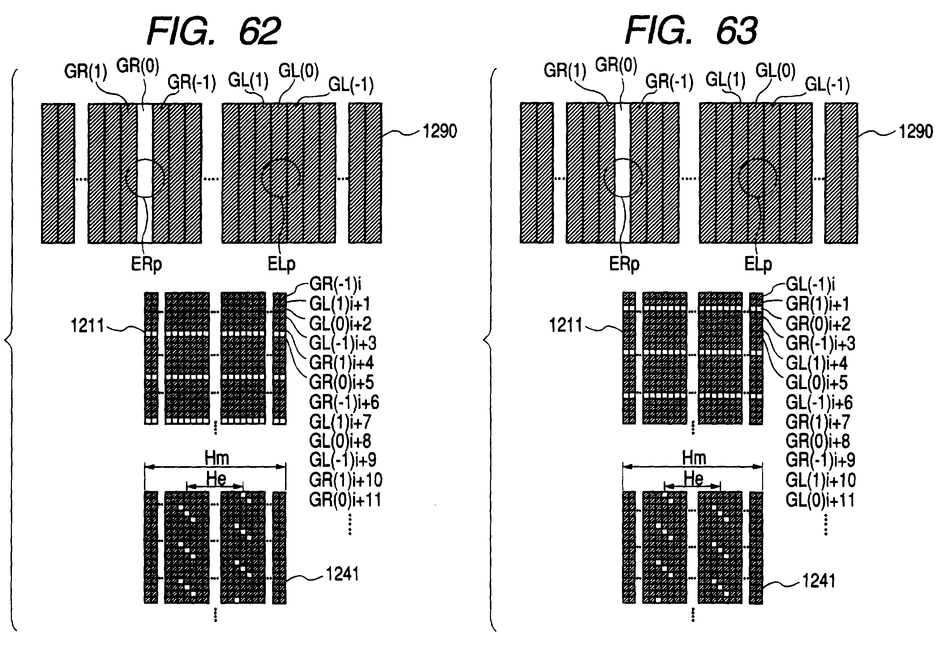

Similarly, in the third state the displays of the mask pattern 1241 and the composite parallax image 1211 are further moved by one pixel as illustrated in Fig. 62.

Namely, the display is switched to the composite parallax image G3(-1 to 1) illustrated in Fig. 52.

After this operation, the sequence and position of the parallax images in the projected parallax image 1290 are also kept in those in the first state as illustrated.

The like operation is carried out thereafter successively to the sixth state of Fig. 63, whereby the same element parallax images can be displayed throughout the entire surface on the image display device without changing the sequence and position of the projected parallax image at the observation position.

The stereoscopic image display with improved resolution can be effected by displaying the first to sixth states as a cycle within the time of the after image effect of the eyes.

As described above, the three images are used for each of the left and right eyes, i.e., the limited number of original parallax images, totally six images, are used, the composite parallax image is switched one from another according to the pupil positions of the left and right eyes, the projected parallax image areas corresponding to the left and right eyes are controlled in correspondence to the pupil positions of the left and right eyes, whereby the observer can observe the three different parallax images through each of the pupils of the left and right eyes; this enables to provide the stereoscopic image display apparatus with little fatigue of the eyes while simultaneously effecting the convergence function by the binocular parallax images and the accommodation function of the eyes.

Although the present embodiment showed the example of the three images for each of the left and right eyes, the apparatus can also be constructed in similar structure to present a plurality of, two or more, images to each of the left and right eyes.

As the elements are set as described above according to the present invention, the invention accomplishes the stereoscopic image display apparatus that can present the image information close to the normal observation state to the observer, that causes no physiological contradiction between the convergence of the observer and the accommodation of the eyes, and that causes little fatigue during the observation of stereoscopic image.

In one aspect of the present invention, the observer is allowed to observe a plurality of parallax images simultaneously through each pupil of the left and right eyes, which presents the effect of being capable of providing the stereoscopic image display apparatus with little fatigue while effecting the convergence function and the accommodation function of the eyes.

Another aspect of the present invention accomplishes the effect of allowing the observer to observe a plurality of parallax images simultaneously through each pupil of the left and right eyes in the simple structure including the two cylindrical lens arrays and one mask pattern.

Another aspect of the present invention accomplishes the effect of letting a plurality of parallax images simultaneously pass through the pupils of the left and right eyes, because the horizontal width of the parallax image areas of the vertical stripe shape is not more than half of the pupil diameter.

Another aspect of the present invention achieves the effect of letting the accommodation function of the eyes act by the plurality of parallax images simultaneously passing through each pupil of the left and right eyes.

Another aspect of the present invention can provide the stereoscopic display apparatus with little fatigue while effecting the convergence function and the accommodation function of the eyes and present the effect of enabling the stereoscopic observation area to be expanded by the tracking control of making the projection positions of the parallax images track the pupil positions of the observer's eyes.

Another aspect of the present invention presents the effect of allowing the observer to observe a plurality of parallax images simultaneously through each pupil of the left and right eyes in the simple structure including the two cylindrical lens arrays and one mask pattern.

Another aspect of the present invention presents the effect of enabling the normal stereoscopic observation, irrespective of variations in the distance between the observer's eyes or irrespective of change in the observation distance from the display, by changing the shape of the mask pattern and controlling the projection positions of the parallax images according to the eye-to-eye distance of the observer.

Another aspect of the present invention presents the effect of enhancing the resolution of observed images, by switching the mask pattern and the parallax image displayed on the display device in synchronism.

In a stereoscopic image display apparatus for guiding a parallax image displayed on a display to the left eye and to the right eye of an observer by use of an optical system, thereby permitting stereoscopic observation of information of the image displayed on the display, the parallax image is comprised of a plurality of original parallax images for the left and right eyes and each of the left and right eyes is allowed observe the plurality of original parallax images simultaneously. The optical system has a vertical cylindrical lens array consisting of vertical cylindrical lenses having a generating line along a vertical direction, a lateral cylindrical lens array consisting of lateral cylindrical lenses having a generating line along a horizontal direction, and a mask pattern in which a plurality of transmitting portions and shield portions are arrayed at a predetermined pitch in the horizontal direction and in the vertical direction.

## Claims

1. A stereoscopic image display apparatus comprising an observation position detecting mechanism for detecting an observation position of an observer and a display for displaying parallax images corresponding to the left and right eyes of the observer while controlling the parallax images so as to track information of the observation position, said stereoscopic image display apparatus permitting stereoscopic observation of the parallax images by use of the observation position detecting mechanism and the display,

   wherein the observation position detecting mechanism comprises pupil detecting means for detecting positions of the pupils of the eyes of the observer, and

   wherein each of the parallax images is comprised of a plurality of original parallax images for the left or right eye and each of the left and right eyes is allowed to observe the plurality of original parallax images.

2. The stereoscopic image display apparatus according to Claim 1, wherein the plurality of original parallax images observed by said left and right eyes are parallax images taken by a plurality of photographing devices under such setting that a separation between the plurality of photographing devices is equal to e, where e is a value close to or not more than half of a pupil diameter p.

3. The stereoscopic image display apparatus according to Claim 1 or 2, wherein said display forms a mask pattern in which a plurality of transmitting portions and shield portions are arrayed at a predetermined pitch in a horizontal direction and in a vertical direction, on a display surface of an optical modulator having a discrete pixel structure, light from light source means is guided to the optical modulator to form patterned beams, an image display device having a discrete pixel structure and displaying a composite parallax image prepared by making use of scan lines is illuminated through optical means with the patterned beams, and beams based on the composite parallax image displayed on the image display device are guided to the left and right eyes of the observer, thereby permitting the stereoscopic observation of image information.

4. The stereoscopic image display apparatus according to Claim 3, wherein a pattern shape of the mask pattern in said optical modulator is varied based on information from said pupil detecting means.

5. The stereoscopic image display apparatus according to Claim 3, wherein a horizontal element of each of the transmitting portions in the mask pattern of said optical modulator is comprised of a plurality of pixels.

6. A stereoscopic image display apparatus for permitting stereoscopic observation of parallax images, using displays for left and right eyes, each of which displays a parallax image corresponding to the left or right eye of an observer,
wherein at least one of the parallax images for the left and right eyes is comprised of a plurality of original parallax images.

7. The stereoscopic image display apparatus according to Claim 6, wherein the plurality of original parallax images observed by said left and right eyes are parallax images taken by a plurality of photographing devices under such setting that a separation between the plurality of photographing devices is equal to e, where e is a value close to or not more than half of a pupil diameter p.

8. The stereoscopic image display apparatus according to Claim 6 or 7, wherein each of said displays forms a mask pattern in which a plurality of transmitting portions and shield portions are arrayed at a predetermined pitch in a horizontal direction and in a vertical direction, on a display surface of an optical modulator having a discrete pixel structure, light from light source means is guided to the optical modulator to form patterned beams, an image display device having a discrete pixel structure and displaying a composite parallax image prepared by making use of scan lines is illuminated through optical means with the patterned beams, and beams based on the composite parallax image displayed on the image display device are guided to the left or right eye of the observer, thereby permitting the stereoscopic observation of image information.

9. The stereoscopic image display apparatus according to Claim 8, wherein a horizontal element of each of the transmitting portions in the mask pattern of said optical modulator is comprised of a plurality of pixels.

10. A stereoscopic vision information photographing method comprising:

a first step of photographing a first left parallax image and a first right parallax image while keeping a distance between photographing optical axes equal to k times a standard eye-to-eye distance E; and
a second step of photographing a second left parallax image and a second right parallax image in such a photographing state that the distance between photographing optical axes is kept at k times the standard eye-to-eye distance E and that photographing positions are displaced by k times a distance e smaller than a standard pupil diameter.

11. A parallax image forming method comprising a step of forming at least one of parallax images for left and right eyes by alternately arranging first parallax partial images of the one parallax image and second parallax partial images of the one parallax image.

12. A stereoscopic image display apparatus for guiding a parallax image displayed on a display to the left eye and to the right eye of an observer by use of an optical system, thereby permitting stereoscopic observation of information of the image displayed on the display, wherein said parallax image comprises a plurality of original parallax images for the left and right eyes and each of the left and right eyes is allowed to observe the plurality of original parallax images.

13. The stereoscopic image display apparatus according to Claim 12, wherein said optical system comprises a vertical cylindrical lens array consisting of vertical cylindrical lenses having a generating line along a vertical direction, a lateral cylindrical lens array consisting of lateral cylindrical lenses having a generating line along a horizontal direction, and a mask pattern in which a plurality of transmitting portions and shield portions are arrayed at a predetermined pitch in the horizontal direction and in the vertical direction.

14. The stereoscopic image display apparatus according to Claim 12, wherein said optical system guides the parallax image displayed on said display to the left eye and to the right eye of said observer in the form of beams of a vertical stripe shape, and a horizontal width of parallax image areas formed at an observation position of the observer by the beams of the vertical stripe shape is set to a value not more than half of a pupil diameter of the observer.

15. The stereoscopic image display apparatus according to Claim 12, wherein n original parallax images (n is an integer not less than 2) forming said parallax image are images taken from view point positions spaced at intervals of a distance equal to a value not more than half of a pupil diameter of the observer.

16. A stereoscopic image display apparatus comprising a pupil position detecting mechanism for detecting positions of pupils of an observer, and an optical system for guiding beams based on a parallax image displayed on a display, to the left eye and to the right eye of the observer, thereby permitting stereoscopic observation of information of the image displayed on the display, wherein said parallax image is comprised of a plurality of original parallax images for the left and right eyes and projected positions of the beams based on the parallax image are controlled according to information about the positions of the pupils of the eyes of the observer, outputted from the pupil position detecting mechanism, whereby the plurality of original parallax images are observed through each of the pupils of the left and right eyes of the observer.

17. The stereoscopic image display apparatus according to Claim 16, wherein said optical system comprises a vertical cylindrical lens array consisting of vertical cylindrical lenses having a generating line along a vertical direction, a lateral cylindrical lens array consisting of lateral cylindrical lenses having a generating line along a horizontal direction, and a mask pattern in which a plurality of transmitting portions and shield portions are arrayed at a predetermined pitch in the horizontal direction and in the vertical direction.

18. The stereoscopic image display apparatus according to Claim 17, wherein a pattern shape of said mask pattern is varied according to an eye-to-eye distance of the observer, based on the information from said pupil position detecting means, and the parallax images corresponding to the left and right eyes of the observer are controlled so as to be projected to the left and right eyes of the observer.

19. The stereoscopic image display apparatus according to Claim 17, wherein when said n original parallax images (n is an integer not less than 2) are projected into n areas of a vertical stripe shape at an observation position, a pattern shape of said mask pattern is switched to another periodically and a display of the parallax image displayed on said display is also switched to another in synchronism therewith, whereby the same parallax images are always projected into the associated areas of the parallax image of the vertical stripe shape projected to the observation position.

20. A stereoscopic image display apparatus for guiding a parallax image displayed on a display to the left eye and to the right eye of an observer by use of an optical system, thereby permitting stereoscopic observation of information of the image displayed on the display, wherein the parallax image is made by combination of six or more original parallax images and three or more original parallax images are observed through each of the pupils of the left and right eyes of the observer.

21. The stereoscopic image display apparatus according to Claim 20, wherein said optical system comprises a vertical cylindrical lens array consisting of vertical cylindrical lenses having a generating line along a vertical direction, a lateral cylindrical lens array consisting of lateral cylindrical lenses having a generating line along a horizontal direction, and a mask pattern in which a plurality of transmitting portions and shield portions are arrayed at a predetermined pitch in the horizontal direction and in the vertical direction.

22. The stereoscopic image display apparatus according to Claim 20, wherein said optical system guides the parallax image displayed on said display to the left eye and to the right eye of said observer in the form of beams of a vertical stripe shape, and a horizontal width of parallax image areas formed at an observation position of the observer by the beams of the vertical stripe shape is set to a value not more than half of a pupil diameter of the observer.

23. The stereoscopic image display apparatus according to Claim 20, wherein said parallax image is made by combination of n original parallax images where n is an integer satisfying $6 \leq n$ and wherein the n original parallax images are images taken from view point positions spaced at intervals of a distance equal to a value not more than half of a pupil diameter of the observer.

24. A stereoscopic image display apparatus comprising a pupil position detecting mechanism for detecting positions of pupils of an observer, and an optical system for guiding beams based on a parallax image displayed on a display, to the left eye and to the right eye of the observer, thereby permitting stereoscopic observation of information of the image displayed on the display, wherein said parallax image is made by combination of six or more original parallax images, and projected positions of the beams based on the parallax image are controlled according to information about the positions of the pupils of the eyes of the observer, outputted from the pupil position detecting mechanism, whereby three or more original parallax images are observed through each of the pupils of the left and right eyes of the observer.

25. The stereoscopic image display apparatus according to Claim 24, wherein said optical system comprises a vertical cylindrical lens array consisting of vertical cylindrical lenses having a generating line along a vertical direction, a lateral cylindrical lens array consisting of lateral cylindrical lenses having a generating line along a horizontal direction, and a mask pattern in which a plurality of transmitting portions and shield portions are arrayed at a predetermined pitch in the horizontal direction and in the vertical direction.

26. The stereoscopic image display apparatus according to Claim 25, wherein a pattern shape of said mask pattern is varied according to an eye-to-eye distance of the observer, based on the information from said pupil position detecting means, and the parallax images corresponding to the left and right eyes of the observer are controlled so as to be projected to the left and right eyes of the observer.

27. The stereoscopic image display apparatus according to Claim 25, wherein said parallax image is made by combination of n original parallax images where n is an integer satisfying $6 \leq n$, and wherein when said n original parallax images are projected into n areas of a vertical stripe shape at an observation position, a pattern shape of said mask pattern is switched to another periodically and a display of the parallax image displayed on said display is also switched to another in synchronism therewith, whereby the same parallax images are always projected into the associated areas of the parallax images of the vertical stripe shape projected to the observation position.

# FIG. 1

# FIG. 2

FIG. 3

EP 1 045 596 A2

*FIG. 4*

141L 145L 142L
146L 144L 143L
Hm

Vm

*FIG. 5*

GL(1)₁ ... GL(1)
GL(2) 
GL(1,2)

*FIG. 6*

GR(1)
GR(2)
GR(1,2)

# FIG. 7

# FIG. 8

EL

GSL2

GSL1

Z

X

# FIG. 9

Lv1

Lv2

Vl

142L    143L

110L
120L
130L
140L
141L
150L

Z

Y

Vm

# FIG. 10

Z

Y

# FIG. 11

EP 1 045 596 A2

## FIG. 12

GL(2) GL(1) GL(2) EL ELp GL(1) GL(2) GL(1)

190L

1 2 3 4 5 6 7 8 9 10 11 12 13 14 15 16 17 18

## FIG. 13

GL(2) GL(1) GL(2) GL(1) EL ELp GL(2) GL(1)

190L

1 2 3 4 5 6 7 8 9 10 11 12 13 14 15 16 17 18

## FIG. 14

GL(2) GL(1) GL(2) EL ELp GL(1) GL(2) GL(1)

190L

1 2 3 4 5 6 7 8 9 10 11 12 13 14 15 16 17 18

GL(2)
GL(1)
GL(2)
GL(1)
GL(2)
GL(1)

111L

141L
142L

EP 1 045 596 A2

# FIG. 15

GL(2) GL(1) GL(2) EL ELp GL(1) GL(2) GL(1)

1 2 3 4 5 6 7 8 9 10 11 12 13 14 15 16 17 18

190L

GL(2)
GL(1)
GL(2)
GL(1)
GL(2)
GL(1)

111L

141L
142L

# FIG. 16

GL(2) GL(1) GL(2) EL ELp GL(1) GL(2) GL(1)

1 2 3 4 5 6 7 8 9 10 11 12 13 14 15 16 17 18

190L

GL(2)
GL(1)
GL(2)
GL(1)
GL(2)
GL(1)

111L

141L
142L

# FIG. 17

# FIG. 18A

# FIG. 18B

FIG. 19

EP 1 045 596 A2

# FIG. 20

# FIG. 21

# FIG. 22

FIG. 23A    FIG. 23B    FIG. 23C

EP 1 045 596 A2

## FIG. 24A

## FIG. 24B

## FIG. 24C

# FIG. 25

GL(5) GL(4) GL(3) GL(2)

GL(6)    GL(1) GL(6)···GL(2)

GL(1)

190L

ELp

1 2 3 4 5 6 7 8 9 10 11 12 13 14 15 16 17 18

EL

ELp

Z

X

110L

120L

130L

140L

GL(6)

GL(2)

GL(1)

GL(6)

GL(2)

GL(1)

111L

141L

EP 1 045 596 A2

## FIG. 26

ELp  GL(6)···GL(2)  GL(1)  GL(6)···GL(2)  GL(1)

190L

1 2 3 4 5 6 7 8 9 10 11 12 13 14 15 16 17 18

## FIG. 27

GL(6)···GL(2)  GL(1)  GL(6)···GL(2)  GL(1)

190L

ELp

1 2 3 4 5 6 7 8 9 10 11 12 13 14 15 16 17 18

## FIG. 28

GL(6)···GL(2)  GL(1)  GL(6)···GL(2)  GL(1)

190L

ELp

1 2 3 4 5 6 7 8 9 10 11 12 13 14 15 16 17 18

GL(6)
⋮
GL(2)
GL(1)
GL(6)
⋮
GL(2)
GL(1)

111L

141L

EP 1 045 596 A2

EP 1 045 596 A2

## FIG. 29

GL(6)···GL(2) GL(1) GL(6)···GL(2) GL(1)

GL(6)

190L

ELp

1 2 3 4 5 6 7 8 9 10 11 12 13 14 15 16 17 18

GL(6)
⋮
GL(2)
GL(1)
GL(6)
⋮
GL(2)
GL(1)

111L

141L

## FIG. 30

GL(1)

GL(6)···GL(2) GL(1) GL(6)···GL(2)

190L

ELp

1 2 3 4 5 6 7 8 9 10 11 12 13 14 15 16 17 18

GL(6)
⋮
GL(2)
GL(1)
GL(6)
⋮
GL(2)
GL(1)

111L

141L

# FIG. 31

# FIG. 32A

# FIG. 32B

# FIG. 33

# FIG. 34

FIG. 35

EP 1 045 596 A2

# FIG. 36

Hm

1241a

1243

1241

Vn

1242

# FIG. 37A

CL          CR

(GL)        (GR)

E

# FIG. 37B

C(1)  C(2)  C(3)  ....  C(n)

e     e

G(1)  G(2)  G(3)         G(n)

# FIG. 38

# FIG. 39

# FIG. 40

# FIG. 41

FIG. 42

FIG. 43

FIG. 44

# FIG. 45A

# FIG. 45B

# FIG. 46

G(n) G(n-1) • • • • • • • • • G(2) G(1)

1290

ERp                    ELp

# FIG. 47

G(n) G(n-1) • • • • • • • • • G(2) G(1)

1290

ERp                    ELp

# FIG. 48

1100

1110

1111

1120

1121

# FIG. 49

EP 1 045 596 A2

# FIG. 50

# FIG. 51

FIG. 52

# FIG. 53

# FIG. 54

# FIG. 55

FIG. 56

FIG. 57

FIG. 58

# FIG. 59A

# FIG. 59B

EP 1 045 596 A2

FIG. 60

FIG. 61

# FIG. 62

GR(1)  GR(0)  GR(-1)  GL(1)  GL(0)  GL(-1)

———1290

ERp          ELp

1211———

GR(-1)i
GL(1)i+1
GL(0)i+2
GL(-1)i+3
GR(1)i+4
GR(0)i+5
GR(-1)i+6
GL(1)i+7
GL(0)i+8
GL(-1)i+9
GR(1)i+10
GR(0)i+11

Hm
He

———1241

# FIG. 63

GR(1)  GR(0)  GR(-1)  GL(1)  GL(0)  GL(-1)

———1290

ERp          ELp

1211———

GL(-1)i
GR(1)i+1
GR(0)i+2
GR(-1)i+3
GL(1)i+4
GL(0)i+5
GL(-1)i+6
GR(1)i+7
GR(0)i+8
GR(-1)i+9
GL(1)i+10
GL(0)i+11

Hm
He

———1241

EP 1 045 596 A2

FIG. 64

FIG. 65

# FIG. 66